(19) Europäisches Patentamt
European Patent Office
Office européen des brevets

(11) **EP 3 451 430 B1**

(12) **EUROPEAN PATENT SPECIFICATION**

(45) Date of publication and mention
of the grant of the patent:
**27.05.2020 Bulletin 2020/22**

(21) Application number: **16900507.1**

(22) Date of filing: **28.04.2016**

(51) Int Cl.:
$H01M\ 10/0525$ (2010.01)    $H01M\ 2/02$ (2006.01)
$H01M\ 2/16$ (2006.01)    $H01M\ 4/13$ (2010.01)
$H01M\ 4/36$ (2006.01)    $H01M\ 4/48$ (2010.01)
$H01M\ 4/505$ (2010.01)    $H01M\ 4/525$ (2010.01)
$H01M\ 4/587$ (2010.01)    $H01M\ 4/131$ (2010.01)
$H01M\ 4/133$ (2010.01)    $H01M\ 4/134$ (2010.01)
$H01M\ 4/38$ (2006.01)    $H01M\ 4/485$ (2010.01)
$H01M\ 10/0585$ (2010.01)    $H01M\ 10/42$ (2006.01)
$H01M\ 4/02$ (2006.01)

(86) International application number:
**PCT/JP2016/063491**

(87) International publication number:
**WO 2017/187637 (02.11.2017 Gazette 2017/44)**

(54) **NON-AQUEOUS ELECTROLYTE SECONDARY BATTERY**

SEKUNDÄRBATTERIE MIT WASSERFREIEM ELEKTROLYT

BATTERIE SECONDAIRE À ÉLECTROLYTE NON AQUEUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.03.2019 Bulletin 2019/10**

(73) Proprietor: **Envision AESC Japan Ltd.
Zama-shi, Kanagawa 252-0012 (JP)**

(72) Inventors:
• **YAMAMOTO, Kensuke
Atsugi-shi
Kanagawa 243-0123 (JP)**
• **OGIHARA, Wataru
Atsugi-shi
Kanagawa 243-0123 (JP)**
• **KANO, Gentaro
Atsugi-shi
Kanagawa 243-0123 (JP)**
• **TANAKA, Hideaki
Atsugi-shi
Kanagawa 243-0123 (JP)**

• **KONDOU, Youichirou
Atsugi-shi
Kanagawa 243-0123 (JP)**
• **SUZUKI, Masaaki
Atsugi-shi
Kanagawa 243-0123 (JP)**
• **TANABE, Tsuyoshi
Atsugi-shi
Kanagawa 243-0123 (JP)**
• **NAKANO, Takashi
Atsugi-shi
Kanagawa 243-0123 (JP)**

(74) Representative: **Grünecker Patent- und
Rechtsanwälte
PartG mbB
Leopoldstraße 4
80802 München (DE)**

(56) References cited:
**WO-A1-2015/111187    WO-A1-2015/146864
JP-A- 2006 073 480    JP-A- 2014 082 139
JP-A- 2014 082 139    JP-A- 2015 106 563
KR-A- 20150 062 918**

EP 3 451 430 B1

## Description

### TECHNICAL FIELD

The present invention relates to a non-aqueous electrolyte secondary battery. The non-aqueous electrolyte secondary battery according to the present invention is used in a power source or auxiliary power source for driving motors of vehicles such as electric vehicles, fuel cell vehicles, and hybrid electric vehicles.

### BACKGROUND ART

In recent years, it has been desired to reduce the amount of carbon dioxide in order to cope with global warming. Hence, a non-aqueous electrolyte secondary battery having a small environmental burden has been used not only in a mobile device or the like but also in a power source device of an electrically driven vehicle such as a hybrid vehicle (HEV), an electric vehicle (EV), or a fuel cell vehicle. A lithium ion secondary battery directed to the application to electrically driven vehicles is desired to have a large capacity and a large area and have a high capacity.

Hitherto, a carbon material such as graphite, which is advantageous in terms of charge and discharge cycle lifetime or cost, has been used for a negative electrode of a lithium ion secondary battery. However, the carbon material has a disadvantage that a charge and discharge capacity of equal to or higher than 372 mAh/g, which is a theoretical capacity obtained from $LiC_6$ as a compound introduced with maximum amount of lithium, cannot be obtained since the battery is charged and discharged by absorbing lithium ions into graphite crystals and desorbing the lithium ions therefrom in the negative electrode active material using the carbon material such as graphite. Thus, by using only the negative electrode active material using the carbon material such as graphite, it is difficult to obtain a capacity and energy density that are high enough to satisfy vehicle use on the practical level.

On the other hand, a battery using a material which is alloyed with Li in the negative electrode active material has improved energy density as compared with a battery using a carbon material such as graphite of the related art, and thus such a material is expected to be used as a material of the negative electrode active material for vehicle use. For example, a Si material absorbs and desorbs 3.75 mol of lithium ion per mol in charging and discharging and has a theoretical capacity of 3600 mAh/g in $Li_{15}Si_4$ (= $Li_{3.75}Si$).

However, a lithium ion secondary battery using the material which is alloyed with Li in the negative electrode, particularly, using the Si material has large expansion-shrinkage in the negative electrode at the time of charging and discharging. For example, volumetric expansion of a graphite material in the case of absorbing Li ions is about 1.2 times. However, the Si material has a problem of a decrease in cycle lifetime of the electrode due to a large volumetric change of about 4 times, which is caused by transition from an amorphous state to a crystal state when Si is alloyed with Li. In addition, in the case of a Si negative electrode active material, the capacity has a trade-off relationship with cycle durability. Thus, there has been a problem in that it is difficult to increase the capacity and improve the cycle durability concurrently.

In order to solve the problems described above, for example, a negative electrode active material which contains an amorphous alloy having a composition represented by formula: $Si_xM_yAl_z$, for a lithium ion secondary battery is proposed (for example, see Patent Literature 1). Herein, in the formula, x, y, and z represent an atomic percentage value, x + y + z = 100, x ≥ 55, y < 22, and z > 0 are satisfied, and M represents a metal formed of at least one kind of Mn, Mo, Nb, W, Ta, Fe, Cu, Ti, V, Cr, Ni, Co, Zr, and Y. In the invention described in Patent Literature 1, it is stated in paragraph [0008] that, by minimizing a content of the metal M, not only a high capacity but also good cycle lifetime is exhibited. In addition, it is stated that, by mixing a graphite material having small expansion, good cycle lifetime is exhibited. Further negative electrode active materials are disclosed in Patent Literature 2 to 6

Citation List

Patent Literatures

Patent Literature 1: JP 2009-517850 A
Patent Literature 2: WO 2015/111187 A1
Patent Literature 3: WO 2015/146864 A1
Patent Literature 4: JP 2014-082139 A
Patent Literature 5: KR 2015 0062918 A
Patent Literature 6: JP 2006-073480 A

## SUMMARY OF INVENTION

Technical Problem

According to the studies of the present inventors, it is found that sufficient charge and discharge cycle characteristics are not achieved in the case of a battery having a large capacity and a large area even by the technique described in Patent Literature 1. Further, it is found that such a decrease in charge and discharge cycle characteristics is caused by a plurality of negative electrode active materials each having a different theoretical charge and discharge capacity being contained in the negative electrode active material layer, that is, is caused by containing a carbon material such as graphite, which is an already-known negative electrode active material, and a Si material having a higher capacity than the carbon material. Further, non-uniformity of distribution of the Si material and the carbon material, which is caused by containing a plurality of negative electrode active materials, for example, a carbon material and a Si material, per unit area in the negative electrode active material layer of the battery is exponentially and significantly exhibited as the capacity and area of the battery are increased. As a result, it is found that, by local current concentration in a plane of the negative electrode active material layer, sites each having a different degradation degree are generated in a plane of the negative electrode active material layer so that cycle characteristics are likely to be degraded.

That is, in a case where sites having a relatively large amount of the Si material and sites having a relatively small amount of the Si material exist in a plane of the negative electrode active material layer containing the Si material and the carbon material as the negative electrode active materials, the expansion of the negative electrode active material layer becomes relatively larger at the time of charging in the sites having a relatively large amount of the Si material. The reason for this is that the Si material has a larger volume change according to the charging and discharging of the battery than the carbon material. As a result, in sites in which the expansion of the negative electrode active material layer is large, an interelectrode distance between a positive electrode and a negative electrode becomes shorter, and in sites in which the expansion of the negative electrode active material layer is small, the interelectrode distance between the positive electrode and the negative electrode becomes longer. Reaction is accelerated in sites in which the interelectrode distance is short since resistance becomes smaller and the amount of current becomes larger, and reaction is difficult to proceed in sites in which the interelectrode distance is long since resistance becomes larger and the amount of current becomes smaller. That is, non-uniformity of the reaction occurs in a plane of the negative electrode active material layer. In particular, in sites in which the amount of reaction is large, acceleration of the side reaction with an electrolyte solution and acceleration of degradation of the active material occur, and thus the cycle durability of the battery is significantly degraded.

In this regard, an object of the present invention is to provide a means for achieving sufficient charge and discharge cycle characteristics in a non-aqueous electrolyte secondary battery having a large capacity and a large area even in a case where a mixture of a high-capacity Si material and a carbon material having small expansion are used as a negative electrode active material.

Solution to Problem

The present inventors have conducted intensive studies in order to solve the above-described problem. As a result, it has been found that the above-described problem is solved by using a ratio of a battery volume to a rated capacity and the rated capacity as an index indicating a large-sized battery having a large capacity and a large area, setting these in a predetermined range, and controlling a variation in dispersibility of a Si material and a carbon material in a negative electrode active material layer to a value in a predetermined range, thereby completing the present invention.

That is, the present invention provides a non-aqueous electrolyte secondary battery, which contains a mixture of a small amount of Si material and a large amount of carbon material as a negative electrode active material and has a variation in dispersibility of a Si material and a carbon material in a negative electrode active material layer within 5% and a variation in coating amount per unit area in the negative electrode active material layer at a plurality of selected sites in a case where a plurality of arbitrary places is selected in a plane of the negative electrode active material layer within 5%, in a large-sized battery in which a rated capacity is 3 Ah or more and a ratio of a battery volume to the capacity is 10 cm$^3$/Ah or less.

Advantageous effect of Invention

According to the present invention, by controlling a difference between a maximum value and a minimum value of the area proportion of the Si material with respect to the total area of the area of the Si material and the area of the carbon material in the cross-section of the negative electrode active material layer within 5%, a variation in amount of expansion at the time of charging in a plane of the negative electrode is decreased. According to this, non-uniformity of the interelectrode distance caused by a difference in magnitude of volume change at the time of charging between the Si material and the carbon material in the large-sized battery may be suppressed. As a result, the reaction with Li ions in a plane of the negative electrode active material layer may uniformly proceed and thus excellent cycle durability may be obtained.

**BRIEF DESCRIPTION OF DRAWINGS**

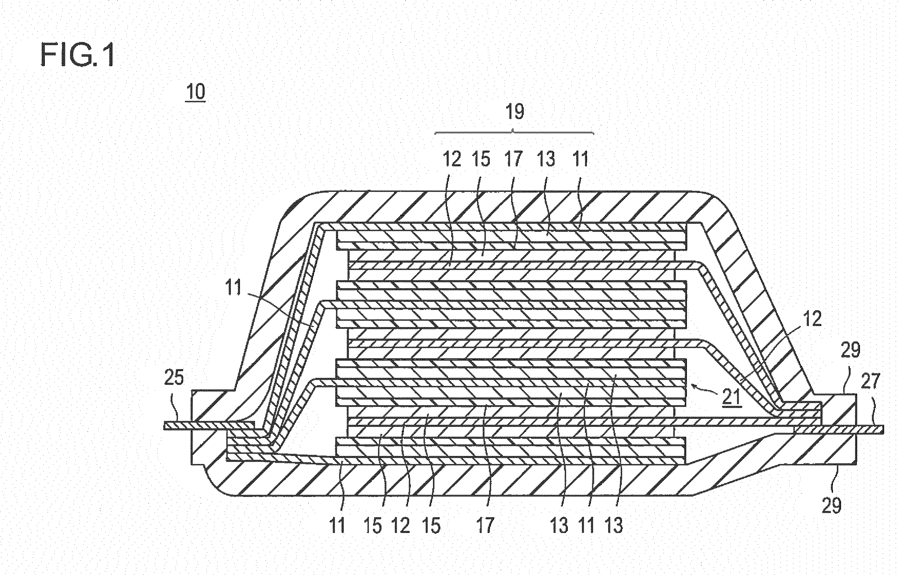

Fig. 1 is a schematic cross-sectional view illustrating a basic configuration of a flat type (laminate type) lithium ion secondary battery, which is not a bipolar type, as an embodiment of a non-aqueous electrolyte secondary battery according to the present invention.

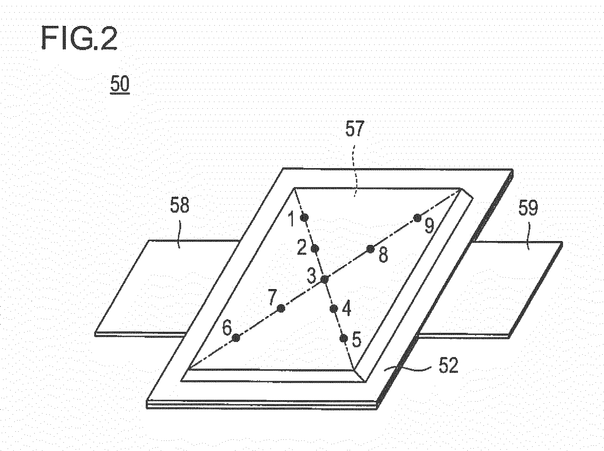

Fig. 2 is a perspective view illustrating the appearance of a flat lithium ion secondary battery as a representative embodiment of the non-aqueous electrolyte secondary battery according to the present invention.

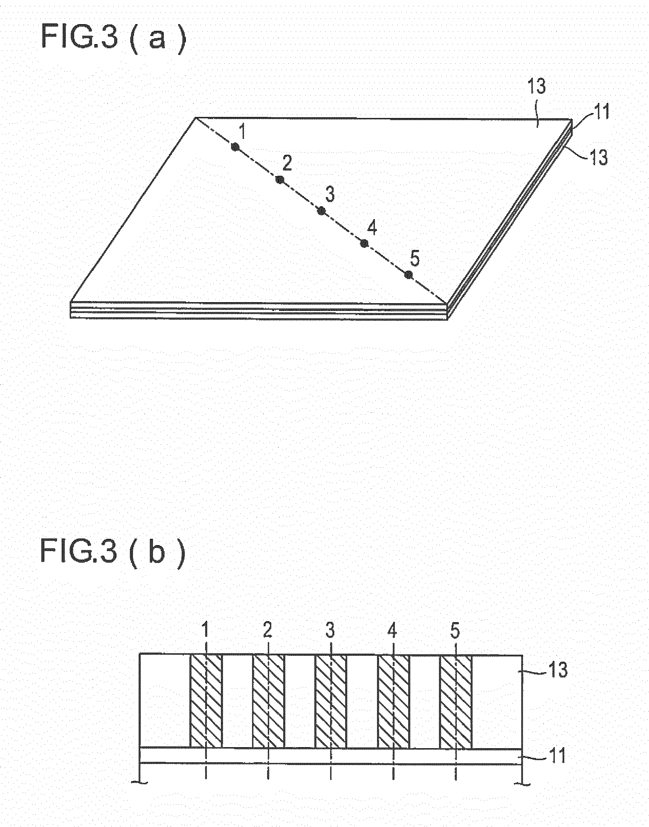

Fig. 3(a) is a perspective view of a rectangular negative electrode that is a constituent member of the flat type (laminate type) lithium ion secondary battery, which is not a bipolar type, as an embodiment of the non-aqueous electrolyte secondary battery according to the present invention. Fig. 3(b) is a cross-sectional view taken along a diagonal line (dashed-dotted line) connecting opposing corners in a plane of the rectangular negative electrode of Fig. 3(a).

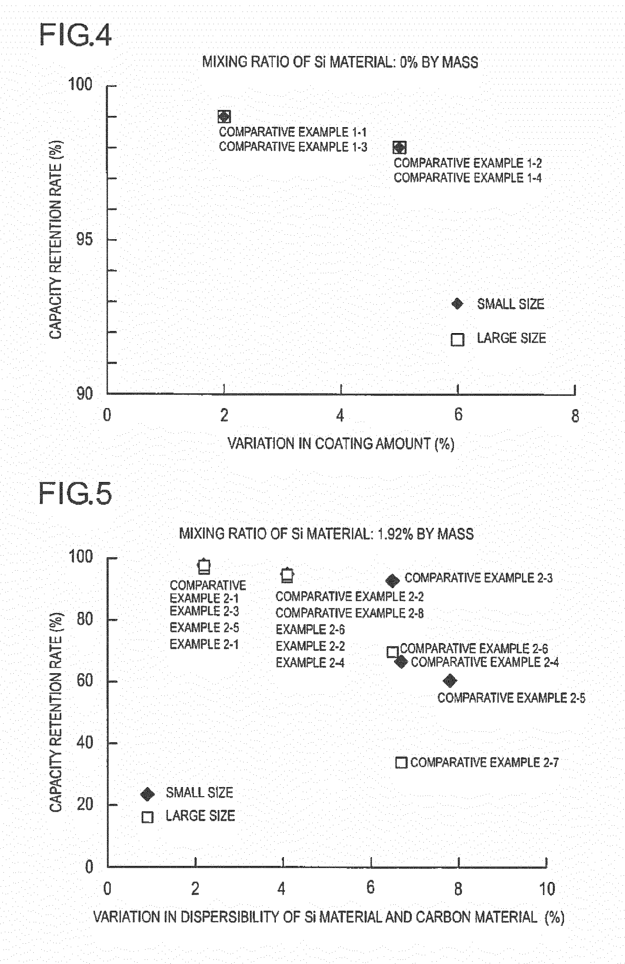

Fig. 4 is a is a diagram illustrating a relation between a variation in coating amount per unit area and a capacity retention rate while batteries are divided into a small-sized battery and a large-sized battery in Comparative Examples 1-1 to 1-4 (a mixing ratio of a Si material is 0% by mass).

Fig. 5 is a diagram illustrating a relation between a variation in dispersibility of a Si material and a carbon material and a capacity retention rate while batteries are divided into a small-sized battery and a large-sized battery in Examples 2-1 to 2-6 and Comparative Examples 2-1 to 2-7 (a mixing ratio of a Si material is 1.92% by mass) .

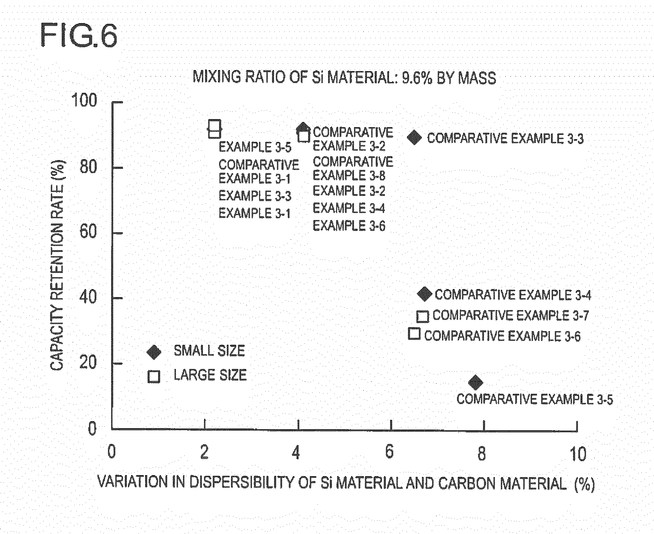

Fig. 6 is a diagram illustrating a relation between a variation in dispersibility of a Si material and a carbon material and a capacity retention rate while batteries are divided into a small-sized battery and a large-sized battery in Examples 3-1 to 3-6 and Comparative Examples 3-1 to 3-7 (a mixing ratio of a Si material is 9.6% by mass) .

**DESCRIPTION OF EMBODIMENTS**

According to an aspect of the present invention, provided is a non-aqueous electrolyte secondary battery which has a ratio value of a battery volume (a product of a projected area of the battery including a battery outer casing body and a thickness of the battery) to a rated capacity of 10 cm$^3$/Ah or less and a rated capacity of 3 Ah or more, the battery including:

a power generating element including

a positive electrode comprising a positive electrode active material layer containing a positive electrode active material formed on a surface of a positive electrode current collector,
a negative electrode comprising a negative electrode active material layer containing a negative electrode active material formed on a surface of a negative electrode current collector, and
a separator, in which

the negative electrode active material layer contains a negative electrode active material represented by the following Formula (1):
[Mathematical Formula 1]

$$\alpha \ (\text{Si material}) + \beta \ (\text{carbon material}) \qquad (1)$$

(in the formula, the Si material is a Si-containing alloy; the carbon material is one or two or more kinds selected from the group consisting of graphite, non-graphitizable carbon, and amorphous carbon; $\alpha$ and $\beta$ represent % by mass of each component in the negative electrode active material layer; and $80 \le \alpha + \beta \le 98$, $0.1 \le \alpha \le 40$, and $58 \le \beta \le 97.9$ are satisfied), and
when area proportions (%) of the Si material and the carbon material in an area of the field of view of each image of cross-sections of the negative electrode active material layer in a case where a plurality of arbitrary places is selected in a plane of the negative electrode active material layer are designated as S (%) and (100 - S) (%), respectively, a difference between the maximum value and the minimum value of S is within 5%. In addition, a variation in coating amount per unit area in the negative electrode active material layer at a plurality of selected sites in a case where a plurality of arbitrary places is selected in a plane of the negative electrode active material layer is within 5%.With such a configuration, the effect of the invention can be effectively exhibited.

Hereinafter, a basic configuration of the non-aqueous electrolyte secondary battery according to the present invention will be described. In the present embodiment, descriptions are given by exemplifying a lithium ion secondary battery.

First, in the lithium ion secondary battery of the present embodiment, a voltage of a cell (single battery layer) is large, and high energy density and high output density can be achieved. Therefore, the lithium ion secondary battery of the present embodiment is excellent for a power source or auxiliary power source for driving a vehicle. As a result, the lithium ion secondary battery of the present embodiment can be suitably used as a lithium ion secondary battery for a driving power source and the like for a vehicle.

In a case where the lithium ion secondary battery is classified in terms of a shape and a structure, for example, the lithium ion secondary battery may be applicable to any batteries having known shapes and structures such as a laminate type (flat type) battery and a wound type (cylindrical type) battery. The structure of the laminate type (flat type) battery contributes to ensuring long-term reliability by a simple sealing technique such as thermocompression bonding, and thus has the advantage in terms of cost and workability.

Further, in terms of electrical connection (electrode structure) inside the lithium ion secondary battery, the lithium ion secondary battery may be applicable not only to a non-bipolar type (internal parallel connection type) battery but also to a bipolar type (internal serial connection type) battery.

In a case where the lithium ion secondary battery is classified in terms of the type of an electrolyte layer used therein, the lithium ion secondary battery may be applicable to batteries including any type of known electrolyte layers such as a solution electrolyte type battery in which a solution electrolyte such as a non-aqueous electrolyte solution is used for an electrolyte layer and a polymer battery in which a polymer electrolyte is used for an electrolyte layer. The polymer battery is classified into a gel electrolyte type battery using a polymer gel electrolyte (also simply referred to as a gel electrolyte) and a solid polymer (all solid state) type battery using a polymer solid electrolyte (also simply referred to as a polymer electrolyte).

Therefore, in the following descriptions, as an example of the lithium ion secondary battery of the present embodiment, a non-bipolar (internal parallel connection type) lithium ion secondary battery will be described briefly with reference to the drawings. However, the technical scope of an electrical device according to the present invention and the lithium ion secondary battery according to the present embodiment should not be limited to the following descriptions.

<Overall Structure of Battery>

Fig. 1 is a schematic cross-sectional view schematically illustrating the overall structure of a flat type (laminate type) lithium ion secondary battery (hereinafter, also simply referred to as a "laminate type battery") which is a representative embodiment of an electrical device of the present invention.

As illustrated in Fig. 1, a laminate type battery 10 of the present embodiment has a structure in which a substantially rectangular power generating element 21, in which a charging and discharging reaction actually progresses, is sealed inside a laminate sheet 29 as an outer casing body. Herein, the power generating element 21 has a configuration in which a positive electrode having a positive electrode active material layer 15 provided on both surfaces of a positive electrode current collector 12, electrolyte layers 17, and a negative electrode having a negative electrode active material layer 13 provided on both surfaces of a negative electrode current collector 11. Specifically, the negative electrode, the electrolyte layer, and the positive electrode are laminated in this order such that one positive electrode active material layer 15 faces the negative electrode active material layer 13 adjacent thereto with the electrolyte layer 17 interposed therebetween.

Accordingly, the positive electrode, the electrolyte layer, and the negative electrode that are adjacent to one another constitute one single battery layer 19. Thus, it can also be said that the laminate type battery 10 illustrated in Fig. 1 has a configuration in which a plurality of the single battery layers 19 is laminated so as to be electrically connected in parallel. Meanwhile, although the outermost negative electrode current collector located on both outermost layers of the power generating element 21 is provided with the negative electrode active material layer 13 only on one side thereof, the outermost negative electrode current collector may be provided with the active material layer on both sides thereof. That is, it is not limited to a current collector having an active material layer formed only on one surface to be used exclusively for the outermost layer, and a current collector provided with the active material layers on both sides thereof may be also used by itself. Further, it is also possible that, by reversing the arrangement of the positive electrode and the negative electrode illustrated in Fig. 1, the outermost positive electrode current collector is located on both outermost layers of the power generating element 21 and the positive electrode active material layer is arranged on a single side or both sides of the outermost positive electrode current collector.

A positive electrode current collecting plate 27 and a negative electrode current collecting plate 25 which are electrically conductive to the respective electrodes (the positive electrodes and the negative electrodes) are attached to the positive electrode current collector 12 and the negative electrode current collector 11, respectively. The positive electrode current collecting plate 27 and the negative electrode current collecting plate 25 are held by being inserted between the respective end portions of the laminate sheet 29 and exposed to the outside of the laminate sheet 29. The positive electrode current collecting plate 27 and the negative electrode current collecting plate 25 may be attached to the positive electrode current collector 12 and the negative electrode current collector 11 of the respective electrodes via a positive electrode lead and a negative electrode lead (not illustrated) as necessary by ultrasonic welding, resistance welding, or the like.

Hereinafter, main constituent members of the battery will be described.

<Active Material Layer>

The active material layer (13, 15) contains an active material, and further contains another additive as necessary.

[Positive Electrode Active Material Layer]

The positive electrode active material layer 15 contains a positive electrode active material. In the present embodiment, the positive electrode active material is not particularly limited; however, lithium nickel-based composite oxide or spinel type lithium manganese composite oxide is preferably contained and lithium nickel-based composite oxide is more preferably contained. Incidentally, the ratio of the total amount of lithium nickel-based composite oxide and spinel type lithium manganese composite oxide with respective to the whole amount of 100% by mass of the positive electrode active material contained in the positive electrode active material layer is preferably 50% by mass or more, more preferably 70% by mass or more, further preferably 85% by mass or more, even more preferably 90% by mass or more, particularly preferably 95% by mass or more, and most preferably 100% by mass.

• Lithium Nickel-Based Composite Oxide

The lithium nickel-based composite oxide is not specifically limited in terms of the composition as long as it is a composite oxide containing lithium and nickel. Representative examples of the composite oxide containing lithium and nickel include a lithium nickel composite oxide ($LiNiO_2$). However, a composite oxide in which a part of nickel atoms of the lithium nickel composite oxide is replaced with another metal atom is more preferable. As a preferable example, a lithium-nickel-manganese-cobalt composite oxide (hereinafter, also simply referred to as "NMC composite oxide") has a layered crystal structure in which a lithium atom layer and a transition metal (Mn, Ni, and Co are arranged with regularity) atom layer are alternately stacked via an oxygen atom layer, one Li atom is included per atom of transition metal M and an amount of extractable Li is twice the amount of spinel type lithium manganese composite oxide, that is, as the supply power is two times higher, it can have a high capacity. In addition, as having higher heat stability compared to $LiNiO_2$, it is particularly advantageous among the nickel-based composite oxides that are used as a positive electrode active material.

In this specification, the NMC composite oxide also includes a composite oxide in which a part of transition metal elements is replaced with another metal element. In this case, examples of another element include Ti, Zr, Nb, W, P, Al, Mg, V, Ca, Sr, Cr, Fe, B, Ga, In, Si, Mo, Y, Sn, V, Cu, Ag, and Zn. Ti, Zr, Nb, W, P, Al, Mg, V, Ca, Sr, and Cr are preferable, Ti, Zr, P, Al, Mg, and Cr are more preferable, and from the viewpoint of improving the cycle characteristics, Ti, Zr, Al, Mg, and Cr are further preferable.

By having a high theoretical discharge capacity, the NMC composite oxide preferably has a composition represented by the General Formula (1) : $Li_aNi_bMn_cCo_dM_xO_2$ (provided that, a, b, c, d, and x satisfy $0.9 \leq a \leq 1.2$, $0 < b < 1$, $0 < c \leq 0.5$, $0 < d \leq 0.5$, $0 \leq x \leq 0.3$, and $b + c + d = 1$; and M represents at least one kind selected from the group consisting of Ti, Zr, Nb, W, P, Al, Mg, V, Ca, Sr, and Cr). Herein, a represents the atomic ratio of Li, b represents the atomic ratio of Ni, c represents the atomic ratio of Mn, d represents the atomic ratio of Co, and x represents the atomic ratio of M. From the viewpoint of the cycle characteristics, it is preferable that $0.4 \leq b \leq 0.6$ is satisfied in the General Formula (1). Incidentally, composition of each element can be measured, for example, by inductively coupled plasma (ICP) atomic emission spectrometry.

In general, from the viewpoint of improving purity and improving electron conductivity of a material, nickel (Ni), cobalt (Co) and manganese (Mn) are known to contribute to capacity and output characteristics. Ti or the like replaces a part of transition metal in a crystal lattice. From the viewpoint of the cycle characteristics, it is preferable that a part of transition element is replaced by another metal element, and it is particularly preferable that $0 < x \leq 0.3$ is satisfied in the General Formula (1). It is considered that the crystal structure is stabilized by dissolving at least one selected from the group consisting of Ti, Zr, Nb, W, P, Al, Mg, V, Ca, Sr, and Cr so that a decrease in capacity of a battery can be prevented even after repeated charge and discharge, and thus, excellent cycle characteristics can be achieved.

As a more preferable embodiment, it is preferable that b, c, and d in the General Formula (1) satisfy $0.44 \leq b \leq 0.51$, $0.27 \leq c \leq 0.31$, and $0.19 \leq d \leq 0.26$ from the viewpoint of having excellent balance between capacity and durability.

The lithium nickel-based composite oxide such as the NMC composite oxide can be produced by selecting various known methods such as a co-precipitation method and a spray drying method. From the viewpoint of having easy production of the composite oxide according to the present embodiment, a co-precipitation method is preferably used. Specifically, as a method for synthesizing the NMC composite oxide, production can be made by, for example, a method described in JP 2011-105588 A, in which a nickel-cobalt-manganese composite oxide is produced by the co-precipitation method and the nickel-cobalt-manganese composite oxide is mixed with a lithium compound followed by calcination. Hereinafter, specific descriptions will be given.

Raw material compounds of a composite oxide, for example, a Ni compound, a Mn compound, and a Co compound, are dissolved in a suitable solvent such as water so as to have a desired composition of a material of the active material. Examples of the Ni compound, the Mn compound, and the Co compound include sulfate, nitrate, carbonate, acetate, oxalate, oxide, hydroxide, and halide of the metal element. Specific examples of the Ni compound, the Mn compound, and the Co compound include nickel sulfate, cobalt sulfate, manganese sulfate, nickel acetate, cobalt acetate, and manganese acetate, but not limited thereto. During the process, a compound containing at least one metal element such as Ti, Zr, Nb, W, P, Al, Mg, V, Ca, Sr, and Cr as a metal element for replacing a part of the layered lithium metal composite oxide constituting the active material may be further incorporated in order to have a further desired composition of an active material, if necessary.

A co-precipitation reaction can be performed by neutralization and precipitation reactions using the above raw material compounds and an alkali solution. Accordingly, metal composite hydroxide or metal composite carbonate containing the metal included in the above raw material compounds can be obtained. Examples of the alkali solution which can be used include an aqueous solution of sodium hydroxide, potassium hydroxide, sodium carbonate, or ammonia. For the neutralization reaction, it is preferable to use sodium hydroxide, sodium carbonate, or a mixture solution thereof. In addition, it is preferable to use an aqueous ammonia solution or ammonia salt for complex reaction.

The addition amount of the alkali solution used for the neutralization reaction is sufficient to have an equivalent ratio of 1.0 to components to be neutralized which are contained in the whole metal salts. However, for pH adjustment, the alkali solution is preferably added together with an amount of excess alkali.

The aqueous ammonia solution or ammonia salt used for a complex reaction is preferably added such that the ammonia concentration in the reaction solution is in a range of 0.01 to 2.00 mol/l. The pH of the reaction solution is preferably controlled in a range of 10.0 to 13.0. Further, the reaction temperature is preferably 30°C or higher and more preferably 30 to 60°C.

The composite hydroxide obtained by co-precipitation reaction is then preferably filtered by suction, washed with water, and dried. Incidentally, by controlling the conditions for performing the co-precipitation reaction (for example, stirring time and alkali concentration), the particle diameter of the composite hydroxide can be controlled, and it has an influence on the average particle diameter (D50) of the secondary particles of a positive electrode active material which is finally obtained.

Subsequently, by mixing and calcining nickel-cobalt-manganese composite hydroxide with a lithium compound, the lithium-nickel-manganese-cobalt composite oxide can be obtained. Examples of the Li compound include lithium hydroxide or a hydrate thereof, lithium peroxide, lithium nitrate, and lithium carbonate.

The calcination treatment may be performed by one step, but is preferably performed by two steps (temporary calcination and main calcination). According to the two-step calcination, a composite oxide can be obtained efficiently. The conditions for the temporary calcination are not particularly limited, and the conditions may vary depending on the lithium raw material, and thus are difficult to unambiguously define. Herein, as factors for controlling the average primary particle diameter and the crystallite diameter in particular, the calcination temperature and the calcination time for calcination (temporary calcination and main calcination in the case of the two-step calcination) are particularly important. By controlling them on the basis of the tendency as described below, the average primary particle diameter and the crystallite diameter can be controlled. That is, the average primary particle diameter and the crystallite diameter are increased by lengthening the calcination time, and the average primary particle diameter and the crystallite diameter are increased by increasing the calcination temperature. Incidentally, the temperature increase rate is preferably 1 to 20°C/min from room temperature. Further, the atmosphere is preferably either air or oxygen atmosphere. Herein, in a case where the NMC composite oxide is synthesized using lithium carbonate as the Li raw material, the temporary calcination temperature is preferably 500 to 900°C, more preferably 600 to 800°C, and further preferably 650 to 750°C. Furthermore, the temporary calcination time is preferably 0.5 to 10 hours and more preferably 4 to 6 hours. Meanwhile, as for the conditions for main calcination, the temperature increase rate is preferably 1 to 20°C/min from room temperature, although it is not particularly limited thereto. Furthermore, the atmosphere is preferably either air or oxygen atmosphere. Herein, in a case where the NMC composite oxide is synthesized using lithium carbonate as the Li raw material, the calcination temperature is preferably 800 to 1200°C, more preferably 850 to 1100°C, and further preferably 900 to 1050°C. Further, the temporary calcination time is preferably 1 to 20 hours and more preferably 8 to 12 hours.

In a case where a tiny amount of a metal element for replacing a part of the layered lithium metal composite oxide constituting a material of the active material is added as necessary, any means such as a method of mixing the metal element in advance with nickel, cobalt, and manganate, a method of adding the metal element simultaneously with nickel, cobalt, manganate, a method of adding the metal element to a reaction solution during the reaction, or a method of adding the metal element to the nickel-cobalt-manganese composite oxide with a Li compound can be employed as the adding method.

The lithium nickel-based composite oxide can be produced by suitably adjusting the reaction conditions such as pH of a reaction solution, a reaction temperature, a reaction concentration, an addition speed, and a stirring time.

• Spinel Type Lithium Manganese Composite Oxide

The spinel type lithium manganese composite oxide typically has a composition of $LiMn_2O_4$, and is a composite oxide which has a spinel structure and essentially contains lithium and manganese. As for the specific configuration or production method, reference can be suitably made to the conventionally known knowledge that is described in JP 2000-77071 A or the like.

Incidentally, it is needless to say that a positive electrode active material other than the lithium nickel-based composite oxide or the spinel type lithium manganese composite oxide described above may be used. When two or more kinds of the positive electrode active materials are used concurrently, in a case where the respective active materials have different particle diameters in order to achieve their own peculiar effects, different particle diameters may be blended together so as to optimally function to achieve their own peculiar effects, and thus it is not necessary to uniformize the particle diameter of all of the active materials.

The average particle diameter of the positive electrode active material contained in the positive electrode active material layer 15 is not particularly limited; however, from the viewpoint of having high output, the average particle diameter is preferably 6 to 11 $\mu$m and more preferably 7 to 10 $\mu$m in terms of the secondary particle diameter. Further, the average particle diameter of the primary particle is 0.4 to 0.65 $\mu$m and more preferably 0.45 to 0.55 $\mu$m. Incidentally, the term "particle diameter" described in this specification means a maximum distance L among distances, each of which is a distance between arbitrary two points on outlines of a particle. Further, as for the value of the "average particle diameter, " a value which is calculated as an average value of particle diameters of particles observed in several to several tens of visual fields by using an observing means such as a scanning electron microscope (SEM) or a transmission electron microscope (TEM).

Further, the positive electrode active material layer preferably contains a binder and a conductive aid in addition to the aforementioned positive electrode active material. Moreover, as necessary, other additives such as an electrolyte (such as a polymer matrix, an ion conductive polymer, or an electrolyte solution) and a lithium salt for enhancing ion conductivity are further contained.

The content of the positive electrode active material which may function as the active material in the positive electrode active material layer is preferably 85 to 99.5% by mass.

(Binder)

The binder used for the positive electrode active material layer is not particularly limited, and for example, the following materials are exemplified: thermoplastic polymers such as polyethylene, polypropylene, polyethylene terephthalate (PET), polyether nitrile, polyacrylonitrile, polyimide, polyamide, cellulose, carboxymethyl cellulose (CMC) and a salt thereof, an ethylene-vinyl acetate copolymer, polyvinyl chloride, styrene-butadiene rubber (SBR), isoprene rubber, butadiene rubber, ethylene-propylene rubber, an ethylene-propylene-diene copolymer, a styrene-butadiene-styrene block copolymer and a hydrogenated product thereof, and a styrene-isoprene-styrene block copolymer and a hydrogenated product thereof; fluorine resins such as polyvinylidene fluoride (PVdF), polytetrafluoroethylene (PTFE), a tetrafluoroethylene-hexafluoropropylene copolymer (FEP), a tetrafluoroethylene-perfluoroalkyl vinyl ether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF); vinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethyl vinyl ether-tetrafluoroethylene-based fluorine rubber (VDF-PFMVE-TFE-based fluorine rubber), and vinylidene fluoride-chlorotrifluoroethylene-based fluorine rubber (VDF-CTFE-based fluorine rubber); and an epoxy resin. These binders may be used singly or two or more kinds thereof may be used concurrently.

The content of the binder in the positive electrode active material layer is preferably 1 to 10% by mass and more preferably 1 to 8% by mass.

(Conductive Aid)

The conductive aid is an additive to be blended for improving conductivity of the positive electrode active material layer or the negative electrode active material layer. Examples of the conductive aid include carbon black such as acetylene black, Ketjen black, or furnace black. When the active material layer contains the conductive aid, the electron network in the inside of the active material layer is effectively formed, thereby contributing to the improvement of output characteristics of a battery.

The content of the conductive aid in the positive electrode active material layer is preferably 1 to 10% by mass and more preferably 1 to 8% by mass. When the blending ratio (content) of the conductive aid is defined in the above range, the following effects are exhibited. That is, as the electron conductivity is sufficiently ensured without inhibiting an electrode reaction, a decrease in energy density caused by decreased electrode density can be suppressed, and also an improvement in energy density based on improvement in electrode density can be obtained.

(Other Components)

Examples of the lithium salt include $Li(C_2F_5SO_2)_2N$, $LiPF_6$, $LiBF_4$, $LiClO_4$, $LiAsF_6$, $LiCF_3SO_3$ and the like.

Examples of the ion conductive polymer include a polyethylene oxide (PEO)-based polymer and a polypropylene oxide (PPO)-based polymer.

The blending ratio of the component contained in the positive electrode active material layer is not particularly limited. The blending ratio may be adjusted while reference can be suitably made to the conventionally known knowledge about a lithium ion secondary battery.

The positive electrode (positive electrode active material layer) can be formed by an ordinary method of applying (coating) a slurry, or by any of a kneading method, a sputtering method, a vapor deposition method, a CVD method, a PVD method, an ion plating method, and a thermal spraying method.

The porosity of the positive electrode active material layer is in a range of 10 to 45% by volume, preferably 15 to 40% by volume, and more preferably 20 to 35% by volume, relative to a total volume of the positive electrode active material layer. The reason for this is that when the porosity is in the above range, pores of the active material layer can effectively function as a path of supplying an electrolyte solution ($Li^+$ ions) to immerse an electrolyte solution into the inside of the active material layer and accelerate an electrode reaction, without impairing characteristics such as battery capacity, or strength.

The thickness of the positive electrode active material layer (active material layer on one surface of a current collector) is not particularly limited as well, and reference can be suitably made to the conventionally known knowledge about a battery. For example, the thickness of the positive electrode active material layer is typically about 1 to 500 $\mu$m and preferably 2 to 100 $\mu$m, considering the purpose of use (for example, focused on output or focused on energy, or the like) of a battery or ion conductivity.

[Negative Electrode Active Material Layer]

The negative electrode active material layer 13 is characterized by containing a negative electrode active material represented by the following Formula (1):
[Mathematical Formula 2]

$$\alpha \ (\text{Si material}) + \beta \ (\text{carbon material}) \qquad (1)$$

(In the formula, the Si material is one or two or more kinds of a Si-containing alloy; the carbon material is one or two or more kinds selected from the group consisting of graphite, non-graphitizable carbon, and amorphous carbon; $\alpha$ and $\beta$ represent % by mass of each component in the negative electrode active material layer; and $80 \leq \alpha + \beta \leq 98$, $0.1 \leq \alpha \leq 40$, and $58 \leq \beta \leq 97.9$ are satisfied).

That is, the negative electrode active material layer 13 essentially contains a Si-containing alloy (also referred to as "Si material") and the carbon material, as the negative electrode active materials.

In this specification, the Si material means $SiO_x$ that is a mixture of amorphous $SiO_2$ particles and Si particles (x represents the number of oxygen atoms satisfying an atomic valence of Si) and a Si-containing alloy. These may be used singly as the Si material or two or more kinds thereof may be used concurrently. Hereinafter, these Si materials will be described in detail.

(Si-Containing Alloy)

The Si-containing alloy is not particularly limited as long as it is an alloy with other metal containing Si, and reference can be suitably made to the conventionally known knowledge. Herein, preferred embodiments of the Si-containing alloy include $Si_xTi_yGe_zA_a$, $Si_xTi_yZn_zA_a$, $Si_xTi_ySn_zA_a$, $Si_xSn_yAl_zA_a$, $Si_xSn_yV_zA_a$, $Si_xSn_yC_zA_a$, $Si_xZn_yV_zA_a$, $Si_xZn_ySn_zA_a$, $Si_xZn_yAl_zA_a$, $Si_xZn_yC_zA_a$, $Si_xAl_yC_zA_a$, and $Si_xAl_yNb_zA_a$ (in the formula, A represents an inevitable impurity; and x, y, z, and a represent values of % by mass and satisfy the conditions of $0 < x < 100$, $0 < y < 100$, $0 \leq z < 100$, $0 \leq a < 0.5$, and $x + y + z + a = 100$). More preferably, a Si-containing alloy further satisfying $0 < z < 100$ in the above formula is exemplified. By using those Si-containing alloys as the negative electrode active material and suitably selecting a predetermined first addition element and a predetermined second addition element, amorphous-crystal phase transition at the time of the alloying with Li can be suppressed so that the cycle lifetime can be improved. In addition, according to this, the negative electrode active material thus obtained has a higher capacity than conventional negative electrode active materials such as carbon-based negative electrode active materials.

It is sufficient that the average particle diameter of the Si-containing alloy as the Si material is at the same level as the average particle diameter of the negative electrode active material contained in the negative electrode active material layer 13 of the related art, and it is not particularly limited. From the viewpoint of having high output, preferably, D50 of the secondary particle diameter is in a range of 1 to 20 $\mu$m. In addition, preferably, D90 of the secondary particle diameter is in a range of 5 to 100 $\mu$m. Herein, as the secondary particle diameter of the Si material, a value obtained by a laser diffraction method is used. However, it is never limited to the above range, and it is needless to say that it can be outside the above range as long as the working effect of this embodiment can be effectively exhibited. Furthermore, the shape of the Si material is not particularly limited, and may be a spherical, elliptical, cylindrical, polygonal, scale-like, or amorphous shape.

Method for Producing Si-Containing Alloy

A method for producing a Si-containing alloy according to the present embodiment is not particularly limited, and the Si-containing alloy can be produced by using various conventionally known production methods. As an example of the method for producing a Si-containing alloy, the following production method is exemplified, but the method for producing a Si-containing alloy is not limited thereto.

First, a step of mixing raw materials of the Si-containing alloy to obtain a mixed powder is performed. In this step, the raw materials of the alloy are mixed in consideration of the composition of the Si-containing alloy to be obtained. As the raw materials of the alloy, the form and the like thereof are not particularly limited as long as the ratio of elements required as the Si-containing alloy can be realized. For example, it is possible to use one obtained by mixing simple substances of elements constituting the Si-containing alloy at a target ratio or an alloy, a solid solution, or an intermetallic compound having a target element ratio. In addition, raw materials in a powder form are usually mixed. According to this, a mixed powder composed of raw materials is obtained.

Subsequently, the mixed powder obtained above is subjected to an alloying treatment. According to this, a Si-containing alloy that can be used as a negative electrode active material for a non-aqueous electrolyte secondary battery is obtained.

As a method for the alloying treatment, there are a solid phase method, a liquid phase method, and a vapor phase method, and examples thereof include a mechanical alloying method, an arc plasma melting method, a casting method, a gas atomizing method, a liquid quenching method, an ion beam sputtering method, a vacuum deposition method, a plating method, and a vapor phase chemical reaction method. Among them, it is preferable to perform the alloying treatment by using the mechanical alloying method. It is preferable to perform the alloying treatment by using the mechanical alloying method since it is possible to easily control the state of the phase. In addition, a step of melting the raw materials or a step of quenching and solidifying the molten material thus molten may be included before the alloying treatment.

By performing the aforementioned alloying treatment, a structure composed of a parent phase/a silicide phase can be formed. In particular, when the time for the alloying treatment is 12 hours or longer, a Si-containing alloy capable of exerting desired cycle durability can be obtained. Incidentally, the time for the alloying treatment is preferably 24 hours or longer, more preferably 30 hours or longer, further preferably 36 hours or longer, still more preferably 42 hours or longer, and particularly preferably 48 hours or longer. Incidentally, the upper limit of the time for the alloying treatment is not particularly limited, but may be usually 72 hours or shorter.

The alloying treatment by the method described above is usually performed in a dry atmosphere, but the particle size distribution after the alloying treatment has a wide width from a small size to a large size in some cases. For this reason, it is preferable to perform a crushing treatment and/or a classification treatment to adjust the particle size.

The particle diameter can be controlled by appropriately performing a treatment such as classification or pulverization to particles obtained by the alloying treatment. Examples of a classification method include wind classification, a mesh filtration method, and a sedimentation method. In addition, the pulverization condition is not particularly limited, but the pulverization time, the rotational speed, and the like by an appropriate pulverizer (for example, an apparatus which can be used also in the mechanical alloying method such as a planetary ball mill) may be appropriately set. As an example of the pulverization condition, an example in which the pulverization is performed using a pulverizer such as planetary ball mill at a rotational speed of 200 to 400 rpm for 30 minutes to 4 hours.

Further, the negative electrode active material layer can be formed by applying a negative electrode active material slurry containing a negative electrode active material, a binder, a conductive aid, a solvent, and the like to a current collector, but a pulverization treatment may be further performed when the negative electrode active material slurry is prepared. A pulverization means is not particularly limited, but a known means can be appropriately employed. The pulverization condition is not particularly limited, but the pulverization time, the rotational speed, and the like may be appropriately set. As an example of the pulverization condition, an example in which the pulverization is performed at a rotational speed of 200 to 400 rpm for 30 minutes to 4 hours is exemplified. Further, the pulverization treatment may be performed in plural time with a cooling period sandwiched therebetween in order to prevent the solvent from being altered by heating due to the pulverization treatment.

(Carbon Material)

The carbon material which may be used in the present invention is one or two or more materials selected from the group consisting of graphite, non-graphitizable carbon, and amorphous carbon. Specifically, the carbon material is one or two or more materials selected from the group consisting of graphite, which is high crystalline carbon, such as natural graphite or artificial graphite; non-graphitizable carbon such as hard carbon; and amorphous carbon like carbon black such as Ketjen black, acetylene black, channel black, lamp black, oil furnace black, or thermal black. Among these, graphite such as natural graphite or artificial graphite is preferably used.

In this embodiment, when the carbon material is used as the negative electrode active material in combination with the Si material, a high initial capacity can be obtained while higher cycle characteristics and rate characteristics are maintained, and thus balanced properties can be exhibited.

The Si-containing alloy is not uniformly disposed in the negative electrode active material layer in some cases. In such a case, the potentials or the capacities exhibited by the Si-containing alloy is different from one another. As a result, in the Si-containing alloy in the negative electrode active material layer, the Si-containing alloy that reacts with a lithium ion excessively and the Si-containing alloy that does not react with a lithium ion are generated. That is, non-uniformity of a reaction of the Si-containing alloy in the negative electrode active material layer with a lithium ion is generated. An excessive action of the Si-containing alloy that reacts with a lithium ion excessively among the above-described alloys may thereby cause decomposition of an electrolytic solution due to a significant reaction with the electrolytic solution or destruction of the structure of the Si-containing alloy due to excessive expansion. As a result, even in a case where the Si-containing alloy having excellent characteristics is used, for example, when the the Si-containing alloy is not disposed uniformly, cycle characteristics as a negative electrode for a non-aqueous electrolyte secondary battery may be deteriorated.

However, when the Si-containing alloy is mixed with the carbon material, the above-described problems can be solved. More specifically, when the Si-containing alloy is mixed with the carbon material, it is possible to uniformly dispose the Si-containing alloy in the negative electrode active material layer. As a result, it is considered that the Si-containing alloy in the negative electrode active material layer exhibits a similar reactivity, and deterioration of cycle characteristics can be prevented.

Incidentally, as a result of mixing the carbon material, the content of the Si material in the negative electrode active material layer is reduced, and thus the initial capacity may be reduced. However, since the carbon material itself has a reactivity with a lithium ion, the degree of reduction in the initial capacity is relatively small. That is, the negative electrode active material according to this embodiment has a larger effect for improving cycle characteristics than the action for the reduction of the initial capacity.

Further, the carbon material hardly changes in volume during a reaction with a lithium ion compared with the Si material. Therefore, even in a case where the change of the Si-containing alloy in volume is large, an influence by the change of the negative electrode active material in volume in accordance with a lithium reaction can be relatively small when the negative electrode active material is seen as a whole.

Further, when the carbon material is contained, a consumed electric quantity (Wh) can be improved. More specifically, the carbon material has a relatively lower potential than the Si material. As a result, the relatively high potential of the Si material can be reduced. The potential of the entire negative electrode is thereby reduced, and therefore the consumed electric quantity (Wh) can be improved. Such an action is particularly advantageous, for example, in use for vehicles.

The shape of the carbon material is not particularly limited, and may be a spherical, elliptical, cylindrical, polygonal, scale-like, or amorphous shape.

A negative electrode active material other than the above-described two types of the negative electrode active material may be used concurrently according to circumstances. Examples of the negative electrode active material which can be used concurrently include a lithium-transition metal composite oxide (for example, $Li_4Ti_5O_{12}$), a metal material, and a lithium alloy-based negative electrode material. It is needless to say that a negative electrode active material other than those can also be used.

The negative electrode active material layer contains a negative electrode active material represented by the following Formula (1).

[Mathematical Formula 3]

$$\alpha \text{ (Si material)} + \beta \text{ (carbon material)} \quad (1)$$

In the Formula (1), the Si material is one or two or more kinds of Si-containing alloys. The carbon material is one or two or more kinds selected from the group consisting of graphite, non-graphitizable carbon, and amorphous carbon as described above. In addition, $\alpha$ and $\beta$ represent % by mass of each component in the negative electrode active material layer, and $80 \leq \alpha + \beta \leq 98$, $0.1 \leq \alpha \leq 40$, and $58 \leq \beta \leq 97.9$ are satisfied.

As it is evident from the Formula (1), the content ($\alpha$) of the Si material in the negative electrode active material layer is 0.1 to 40% by mass. In addition, the content ($\beta$) of the carbon material is 58 to 97.9% by mass. Moreover, the total content ($\alpha + \beta$) of these materials is 80 to 98% by mass.

Incidentally, the mixing ratio of the Si material and the carbon material of the negative electrode active material is not particularly limited as long as it satisfies the content requirement described above, and it can be suitably selected depending on desired use or the like. In this embodiment, regarding the mixing ratio of the Si material and the carbon material, when the content of the Si material is set to be relatively small and the content of the carbon material is set to be relatively large, the working effect of this embodiment can be effectively exhibited. In particular, the content ($\alpha$) of the Si material in the negative electrode active material is preferably 0.5 to 40% by mass, more preferably 1 to 30% by mass, and further preferably 1 to 20% by mass. When the content of the Si material in the negative electrode active material layer is less than 0.1% by mass, a high initial capacity is difficult to obtain. On the other hand, when the content of the Si material is more than 40% by mass, high cycle characteristics are not obtained. Further, the content ($\beta$) of the carbon material in the negative electrode active material is in a range of preferably 58 to 97.5% by mass, more preferably 68 to 97% by mass, and further preferably 78 to 97% by mass. When the content of the carbon material in the negative electrode active material is less than 58% by mass, high cycle characteristics is not obtained. On the other hand, when the content of the carbon material in the negative electrode active material is more than 97.9% by mass, a high initial capacity is difficult to obtain.

The total content ($\alpha + \beta$) of the Si material and the carbon material in the negative electrode active material layer is not particularly limited as long as it satisfies the content requirement described above, and it can be suitably selected depending on desired use or the like. The total content ($\alpha + \beta$) of the Si material and the carbon material in the negative electrode active material layer is in a range of 80 to 98% by mass, preferably 85 to 97% by mass, and further preferably 90 to 97% by mass. When the total content of the Si material and the carbon material in the negative electrode active material layer is less than 80% by mass, weight energy density is decreased, which is not preferable. On the other hand, when the total content of the Si material and the carbon material is more than 98% by mass, the binder and the conductive aid are not sufficient and this causes degradation in battery performance, which is not preferable.

(Binder)

In the present embodiment, the negative electrode active material layer preferably contains a binder. As the binder contained in the negative electrode active material layer, an aqueous binder is preferably contained. Regarding the aqueous binder, procurement of water as a raw material is easy and also only water vapor is generated during drying, and thus there is an advantage that the investment on facilities of a production line can be greatly cut down and a decrease in environmental burden can be achieved.

The aqueous binder refers to a binder which contains water as a solvent or a dispersion medium, and specific examples thereof include a thermoplastic resin, a polymer exhibiting rubber elasticity, a water-soluble polymer, and any mixture thereof. Herein, the binder which contains water as a dispersion medium includes all which are regarded as latex or an emulsion, and it refers to a polymer that is emulsified in water or suspended in water. Examples thereof include a polymer latex obtained by emulsion polymerization in a self-emulsifying system.

Specific examples of the aqueous binder include a styrene polymer (styrene-butadiene rubber (SBR), a styrene-vinyl acetate copolymer, a styrene-acrylic copolymer, or the like), acrylonitrile-butadiene rubber, methyl methacrylate-butadiene rubber, (meth)acrylic polymer (polyethyl acrylate, polyethyl methacrylate, polypropyl acrylate, polymethyl methacrylate (methyl methacrylate rubber), polypropyl methacrylate, polyisopropyl acrylate, polyisopropyl methacrylate, polybutyl acrylate, polybutyl methacrylate, polyhexyl acrylate, polyhexyl methacrylate, polyethylhexyl acrylate, polyethylhexyl methacrylate, polylauryl acrylate, polylauryl methacrylate, or the like), polytetrafluoroethylene, polyethylene, polypropylene, an ethylene-propylene copolymer, polybutadiene, butyl rubber, fluorine rubber, polyethylene oxide, polyepichlorohydrin, polyphosphagen, polyacrylonitrile, polystyrene, an ethylene-propylene-diene copolymer, polyvinylpyridine, chlorosulfonated polyethylene, a polyester resin, a phenolic resin, and an epoxy resin. These aqueous binders may be used singly or two or more kinds thereof may be used concurrently.

From the viewpoint of binding property, the aqueous binder preferably contains at least one rubber-based binder selected from the group consisting of styrene-butadiene rubber (SBR), acrylonitrile-butadiene rubber, methyl methacrylate-butadiene rubber, and methyl methacrylate rubber. Further, the aqueous binder preferably contains styrene-butadiene rubber (SBR) since the binding property thereof is favorable.

In the case of using the aqueous binder, a thickener is preferably used concurrently. The aqueous binder has strong binding property (binding effect) but does not have sufficient thickening property. Therefore, a sufficient thickening effect is not obtained only by adding the aqueous binder to an aqueous slurry at the time of producing the electrode. In this regard, by using a thickener having excellent thickening property, thickening property is imparted to the aqueous binder. The thickener is not particularly limited, and examples thereof include polyvinyl alcohol (the average polymerization degree is suitably 200 to 4000 and more suitably 1000 to 3000, and the saponification degree is suitably 80% by mol or more and more suitably 90% by mol or more) and a modified product thereof (a product obtained by saponifying 1 to 80% by mol of the vinyl acetate units in a copolymer of ethylene/vinyl acetate = (2/98) to (30/70) molar ratio, a product obtained by partially acetalizing 1 to 50% by mol of polyvinyl alcohol, or the like), starch and a modified product thereof (oxidized starch, phosphoric acid esterified starch, cationized starch, or the like), cellulose derivatives (carboxymethyl cellulose (CMC), methylcellulose, hydroxypropyl cellulose, hydroxyethyl cellulose, salts thereof, or the like), polyvinylpyrrolidone, polyacrylic acid (salt), polyethylene glycol, a copolymer of (meth)acrylamide and/or (meth)acrylate salt [a (meth)acrylamide polymer, a (meth)acrylamide-(meth)acrylate salt copolymer, a (meth)acrylic acid alkyl (having 1 to 4 carbon atoms) ester- (meth) acrylate salt copolymer, or the like], a styrene-maleate salt copolymer, a mannich modified product of polyacrylamide, a formalin condensation type resin (a urea-formalin resin, a melamin-formalin resin, or the like), a polyamine or dialkylamine-epichlorohydrin copolymer, polyethyleneimine, casein, soybean protein, synthetic protein, and a galactomannan derivative. These thickeners may be used singly or two or more kinds thereof may be used concurrently.

In the case of using styrene-butadiene rubber (SBR) suitable as the aqueous binder, from the viewpoint of improving the coating property, the following thickener is preferably used concurrently. Examples of the thickener, which is suitably used concurrently with styrene-butadiene rubber (SBR) include polyvinyl alcohol and a modified product thereof, starch and a modified product thereof, cellulose derivatives (such as carboxymethyl cellulose (CMC), methylcellulose, hydroxyethyl cellulose, and a salt thereof), polyvinylpyrrolidone, polyacrylic acid (salt), and polyethylene glycol. Among them, styrene-butadiene rubber (SBR) and carboxymethyl cellulose (CMC) or a salt thereof (CMC (salt)) are preferably combined. The mass content ratio of the SBR (aqueous binder) and the thickener is not particularly limited, but is preferably SBR (aqueous binder) : the thickener = 1 : (0.3 to 0.7) .

In a case where the negative electrode active material layer contains a binder, the content of the aqueous binder of the binder used in the negative electrode active material layer is preferably 80 to 100% by mass, preferably 90 to 100% by mass, and preferably 100% by mass. As a binder other than the aqueous binder, the binder used in the positive electrode active material layer is exemplified.

The amount of the binder contained in the negative electrode active material layer is not particularly limited as long as it is an amount in which the active material can be bound, and the amount of the binder is preferably 0.5 to 15% by mass, more preferably 1 to 10% by mass, further preferably 1 to 8% by mass, particularly preferably 1 to 4% by mass, and most preferably 1.5 to 3.5% by mass with respect to 100% by mass of the total amount of the negative electrode active material layer. Since the aqueous binder exhibits a high binding force, the active material layer can be formed by adding a smaller amount of the aqueous binder as compared with an organic solvent-based binder. The amount of the thickener contained in the negative electrode active material layer is obtained from the mass content ratio of the aqueous binder (such as SBR) and the thickener, the amount of the binder contained in the negative electrode active material layer, and the content of the aqueous binder of the binder contained in the negative electrode active material layer.

In addition to the active material and the binder, the negative electrode active material layer further contains other additives such as a conductive aid, an electrolyte (such as a polymer matrix, an ion conductive polymer, or an electrolyte solution), and a lithium salt for enhancing ion conductivity, as necessary, in addition to the above-described thickener.

(Conductive Aid)

The conductive aid is an additive to be blended for improving conductivity of the positive electrode active material layer or the negative electrode active material layer. Examples of the conductive aid include, although not particularly limited, carbon materials such as carbon black such as acetylene black, Ketjen black, or furnace black, carbon powder such as channel black, or thermal black, and various carbon fibers such as vapor-grown carbon fiber (VGCF; registered trademark). When the active material layer contains the conductive aid, the electron network in the inside of the active material layer is effectively formed, thereby contributing to the improvement of output characteristics of a battery.

The content of the conductive aid in the negative electrode active material layer is preferably 0.1 to 10% by mass and more preferably 0.5 to 8% by mass. When the blending ratio (content) of the conductive aid is defined in the above range, the following effects are exhibited. That is, as the electron conductivity is sufficiently ensured without inhibiting an electrode reaction, a decrease in energy density caused by decreased electrode density can be suppressed, and also an improvement in energy density based on improvement in electrode density can be obtained.

(Lithium Salt)

The lithium salt is contained in the negative electrode active material layer by the aforementioned electrolyte infiltrating to the negative electrode active material layer. Therefore, the specific form of the lithium salt which may be contained in the negative electrode active material layer is the same as the lithium salt constituting the electrolyte. Examples of the lithium salt include $Li(C_2F_5SO_2)_2N$, $LiPF_6$, $LiBF_4$, $LiClO_4$, $LiAsF_6$, and $LiCF_3SO_3$.

(Ion Conductive Polymer)

Examples of the ion conductive polymer include a polyethylene oxide (PEO)-based polymer and a polypropylene oxide (PPO)-based polymer.
The blending ratio of the component contained in the negative electrode active material layer is not particularly limited. The blending ratio may be adjusted while reference can be suitably made to the conventionally known knowledge about a lithium ion secondary battery.

(Variation in Dispersibility of Si Material and Carbon Material)

In the present embodiment, it is characterized in that, when area proportions (%) of the Si material and the carbon material in an area of the field of view of each image of cross-sections of the negative electrode active material layer in a case where a plurality of arbitrary places is selected in a plane of the negative electrode active material layer are designated as S (%) and (100 - S) (%), respectively, a difference between the maximum value and the minimum value of S is within 5%. That is, in the case of a large-sized battery having a large capacity and a large area, when sites having a large amount of the Si material and sites having a small amount of the Si material exist in a plane of the negative electrode active material layer, the expansion of the electrode at the time of charging becomes larger in the sites having a large amount of the Si material. On the other hand, the expansion of the electrode becomes smaller in the sites having a small amount of the Si material. An interelectrode distance between the positive electrode and the negative electrode becomes shorter in sites in which the expansion of the electrode is large, and the interelectrode distance between the positive electrode and the negative electrode becomes longer in sites in which the expansion of the electrode is small. Reaction is accelerated in sites in which the interelectrode distance is short since resistance becomes smaller and the amount of current becomes larger. Reaction is difficult to proceed in sites in which the interelectrode distance is long since resistance becomes larger and the amount of current becomes smaller. That is, non-uniformity of the reaction occurs in a plane of the negative electrode active material layer. In particular, in sites in which the amount of reaction is large, acceleration of the side reaction with an electrolyte solution and acceleration of degradation of the active material occur, and thus the cycle durability of the battery is significantly degraded. In an existing battery which is not a large-sized battery, by concurrently using the Si material + the carbon material described in Patent Literature 1, the cycle durability of the battery was not degraded, and thus the above-described problem did not occur (see Tables 2 and 3). That is, it was found that the above-described problem is new peculiar one occurring only in a case where the Si material + the carbon material are concurrently used and the battery is a large-sized battery having a large capacity and a large area. Regarding such a peculiar problem, it can be said that the above-described problem can be solved by controlling the variation in dispersibility of the Si material and the carbon material within 5%, and thus the cycle durability of the battery can be significantly improved. Specifically, when the above-described requirement (the variation in dispersibility of the Si material and the carbon material being set within 5%) is satisfied, in a large-sized battery having a large capacity and a large area, the variation in amount of expansion at the time of charging in a plane of the negative electrode active material layer is decreased. According to this, the phenomenon that non-uniformity of reactivity with Li ions is caused by an interelectrode distance between a positive electrode and a negative electrode being increased in a certain site and being decreased in a certain site is suppressed, and thus the cycle durability of the battery is improved. Further, the "difference between the maximum value and the minimum value of S when area proportions (%) of the Si material and the carbon material in an area of the field of view of each image of cross-sections of the negative electrode active material layer in a case where a plurality of arbitrary places is selected in a plane of the negative electrode active material layer are designated as S (%) and (100 - S) (%), respectively" is also simply referred to as a "variation in dispersibility of the Si material and the carbon material."

When area proportions (%) of the Si material and the carbon material in an area of the field of view of each image of cross-sections of the negative electrode active material layer in a case where a plurality of arbitrary places is selected in a plane of the negative electrode active material layer are designated as S (%) and (100 - S) (%), respectively, the difference between the maximum value and the minimum value of S (variation in dispersibility of the Si material and the carbon material) is preferably within 4.1%, more preferably within 3.0%, still more preferably within 2.5%, and particularly preferably within 2.2%. When the variation in dispersibility of the Si material and the carbon material is set within the above-described suitable range, the cycle durability of the battery can be further improved. The lower limit of the difference between the maximum value and the minimum value of S (variation in dispersibility of the Si material and the carbon material) is not particularly limited, but from the viewpoint of productivity, is 0.1% or more, for example. Further, when the difference between the maximum value and the minimum value of S is in a range of 0.1% or more, the effect of improving the cycle durability according to the degree of a decrease in variation may be significantly obtained. Hereinafter, the variation in dispersibility of the Si material and the carbon material will be described in detail.

As the arbitrary places in a plane of the negative electrode active material layer, from the viewpoint of measuring the variation in dispersibility of the Si material and the carbon material in a plane of the negative electrode active material layer, arbitrary places may be selected so as to include the vicinity of an end portion, the vicinity of a center portion, and the vicinity of an intermediate portion between the end portion and the center portion in a plane of the negative electrode active material layer in a balanced manner.

Regarding the arbitrary places in a plane of the negative electrode active material layer, a plurality of arbitrary places (two or more) may be selected, but from the viewpoint of measuring the variation in dispersibility of the Si material and the carbon material in a plane of the negative electrode active material layer as described above, five or more arbitrary places are preferable. Specifically, for example, places obtained by equally dividing a diagonal line (dashed-dotted line) in a plane of the negative electrode active material layer into six illustrated in Fig. 3(a) (places marked with number symbols 1 to 5 in Fig. 3 (a)), or the like can be appropriately selected so as to include the vicinity of the end portion, the vicinity of the center portion, and the vicinity of the intermediate portion between the end portion and the center portion in a plane of the negative electrode active material layer in a balanced manner. However, the arbitrary place is not limited to the places illustrated in Fig. 3 (a), but the arbitrary place may be places obtained by equally dividing another diagonal line crossing the diagonal line illustrated in Fig. 3(a) into six (or more). Alternatively, places obtained by equally dividing an axis line in a longitudinal direction and an axis line in a shorter direction, which pass through the center point in a plane of the negative electrode active material layer, appropriately into six (or more) may be selected, and there is no particular limitation as long as the vicinity of the end portion, the vicinity of the center portion, and the vicinity of the intermediate portion between the end portion and the center portion in a plane of the negative electrode active material layer are included in a balanced manner. Incidentally, also in Examples, places obtained by equally dividing the diagonal line (dashed-dotted line) in a plane of the negative electrode active material layer into six illustrated in Fig. 3(a) (places marked with number symbols 1 to 5 in Fig. 3(a)) were selected. Incidentally, Fig. 3(a) is a perspective view of a rectangular negative electrode that is a constituent member of the flat type (laminate type) lithium ion secondary battery, which is not a bipolar type, as the embodiment of the non-aqueous electrolyte secondary battery according to the present invention. Fig. 3(b) is a cross-sectional view taken along a diagonal line (dashed-dotted line) connecting opposing corners in a plane of the rectangular negative electrode of Fig. 3(a).

As for each image of cross-sections of the negative electrode active material layer, each image of secondary electron images or reflection electron images obtained by observing, with an electron microscope, cross-sectional portions corresponding to arbitrary places in a plane of the negative electrode active material layer in the cross-section of the negative electrode active material layer, which is cut such that the arbitrary places in a plane of the negative electrode active material layer described above are included, is used. For example, as each image of cross-sections of the negative electrode active material layer, it is possible to use each image of secondary electron images or reflection electron images obtained by observing, with an electron microscope, five sites marked with number symbols 1 to 5 in Fig. 3(b) corresponding to places of number symbols 1 to 5 in Fig. 3(a) and the vicinities thereof (shaded portions in the drawing). Also in the Examples, each image of reflection electron images obtained by observing, with an electron microscope, five sites marked with number symbols 1 to 5 in Fig. 3(b) and the vicinities thereof (shaded portions in the drawing) were used.

As for the area of the field of view in each image of cross-sections of the negative electrode active material layer, it is possible to use a whole area (whole field of view) of each image of reflection electron images obtained by observing, with an electron microscope, arbitrary sites in a thickness direction of the cross-section corresponding to an arbitrary place in a plane of the negative electrode active material layer. The area of the field of view of each image of cross-sections of the negative electrode active material layer is not particularly limited, but for example, a rectangle in which the vertical side (thickness direction) is the thickness of the negative electrode active material layer and the horizontal side (direction perpendicular to the thickness direction) is 100 $\mu$m is used. A rectangle in which the vertical side is the thickness of the negative electrode active material layer and the horizontal side is 50 $\mu$m is further preferably used. A rectangle in which the vertical side is the thickness of the negative electrode active material layer and the horizontal side is 25 $\mu$m is further preferably used. In the Examples, as the "area of the field of view of each image of cross-sections of the negative electrode active material layer", a whole area (whole field of view) of the reflection electron images obtained by observing, with an electron microscope, five sites illustrated in Fig. 3 (b) and the vicinities thereof (shaded portions in the drawing) (an area of a rectangular in which the vertical side is the thickness of the negative electrode active material layer and the horizontal side is 100 $\mu$m) was used.

(Calculation Method of Area Proportion (%) of Si Material and Area Proportion (%) of Carbon Material)

Further, a method of calculating the area proportion (%) of the Si material and the carbon material in the area of the field of view of each image of cross-sections of the negative electrode active material layer is not limited, but for example, the following method of image processing the cross-sections of the negative electrode active material layer is mentioned. That is, the following method can be used. The negative electrode is subjected to cross-section processing by an arbitrary cross-section processing method, a secondary electron image or a reflection electron image obtained by observing, with an electron microscope, a cross-sectional portion corresponding to an arbitrary place in a plane of the negative electrode active material layer is then binarized with a threshold for distinguishing the Si material and the carbon material, and the area proportion is calculated. Specifically, a secondary electron image or a reflection electron image is captured with an electron microscope, and then image processing software is used with respect to the image. The image processing software is not limited, but for example, AxioVision manufactured by Carl Zeiss AG, WinROOF manufactured by MITANI CORPORATION, Image-Pro manufactured by Media Cybernetics, and the like can be used. For example, the measurement image is gray-scaled, and then an appropriate threshold value is set between grayscale values of a part corresponding to the Si material and a part corresponding to the carbon material is set. As a method of setting the appropriate threshold value, any methods such as a method of setting any one value of the Si material and the carbon material as a threshold value without any change or setting an intermediate value of numerical values of both the materials as a threshold value can be applied depending on the degree of the difference between grayscale values of both the materials. Preferably, the intermediate value of numerical values of both the materials is set as a threshold value.

Incidentally, the variation in dispersibility of the Si material and the carbon material described above corresponds to a case where one sheet of the negative electrode is used, but preferably, similar variation measurement is preferably performed for a plurality of sheets. Specifically, three sheets or more are preferable, five sheets or more are more preferable, and seven sheets or more are further preferable.

In order to control a variation in dispersibility of the Si material and the carbon material described above, mainly, a stirring speed, a stirring time, or the like when stirring is performed using a stirring and defoaming apparatus, or the like at the time of producing the negative electrode active material (water-based) slurry may be changed to adjust the variation. In addition, mainly, a vibration time, an ultrasonic wavelength, or the like when stirring is performed using ultrasonic vibration at the time of producing the negative electrode active material (water-based) slurry may be changed to adjust the variation, and thus there is no particular limitation.

Preferably, when the negative electrode active material (water-based) slurry is prepared, first, an aqueous solution of a thickener such as a carboxymethyl cellulose sodium salt is mixed in plural times with the negative electrode active material, the conductive aid, and the like, for example, the solid content ratio of the slurry is gradually decreased under stirring for 2 minutes or longer in total. Thereafter, a binder such as styrene-butadiene rubber is added thereto and is stirred to obtain a negative electrode active material slurry. The thickener such as a carboxymethyl cellulose sodium salt provides stickiness to the slurry obtained by mixing. Regarding powders of the Si material, the carbon material, and the like, first, the powders aggregate in an aqueous solution slurry and are in a non-uniformly dispersed state, but by adding a thickener and stirring the mixture, the powders becomes a viscous product, and by applying shear stress, the powders are crushed to loosen the aggregation so that the powders become powder particles and thus are uniformly dispersed. At this time, for example, by gradually decreasing the solid content ratio of the slurry with 2 to 5 stages, the variation in dispersibility of the Si material and the carbon material can be efficiently decreased. In single stirring, the stirring speed is preferably 1000 to 3000 rpm and more preferably 1500 to 2500 rpm. In single stirring, the stirring time is preferably 30 seconds to 5 minutes and more preferably 1 to 5 minutes. The stirring temperature is preferably 20 to 30°C. It is preferable that, by performing the addition of the thickener and the stirring as described above 1 to 5 times, preferably 2 to 5 times with a resting period of preferably 30 to 180 seconds sandwiched therebetween, the solid content ratio is gradually decreased. Incidentally, by providing a resting period, as compared with a case where stirring is continuously performed, an increase in temperature of the slurry is less likely to occur. Therefore, it can be prevented that the temperature of the slurry is increased so that the slurry is dried. Further, by performing the addition of the thickener and the stirring in plural times, the solid content ratio of the slurry can be gradually decreased. That is, when the solid content ratio of the slurry is high, the slurry has a high viscosity, and as the solid content ratio is decreased, the viscosity is decreased. At this time, when the viscosity is decreased at one time, the shear stress at the time of dispersing is less likely to be applied and the aggregated powder is less likely to be loosened in some cases. On the other hand, when the solid content ratio is gradually decreased by performing the addition of the thickener and the stirring in plural times and the viscosity is gradually decreased, since the powder is easily to loosen, the dispersibility of the Si material and the carbon material can be made more uniform.

After powder is loosened using a thickener as described above, a binder, such as styrene-butadiene rubber, having the binding property between materials or between a material and a current collector is preferably added. After the binder is added, stirring is performed, for example, at 1000 to 3000 rpm, preferably at 1500 to 2500 rpm and preferably for 10 seconds to 5 minutes, more preferably for 30 seconds to 3 minutes, and further preferably for 40 seconds to 3 minutes.

Further, by setting a ratio A/C of A ($\mu$m) of D50 of the secondary particle diameter of the Si material to C ($\mu$m) of D50 of the secondary particle diameter of the carbon material to be less than 0.5, the dispersibility of the Si material and the carbon material can be easily controlled within 5%. Further, by setting a ratio B/D of B ($\mu$m) of D90 of the secondary particle diameter of the Si material to the thickness D ($\mu$m) of the negative electrode active material layer to be less than 0.5, the dispersibility of the Si material and the carbon material can be easily controlled within 5%.

(Variation in Coating Amount per Unit Area)

In the present embodiment, the variation in coating amount per unit area of the negative electrode active material layer at a plurality of selected sites in a case where a plurality of arbitrary places is selected in a plane of the negative electrode active material layer is within 5%. In the case of a large-sized battery having a large capacity and a large area and using the Si material and the carbon material as the negative electrode active materials, the difference in amount of expansion per unit area tends to be increased according to expansion and contraction of the negative electrode active material layer at the time of charging and discharging in a case where sites having a large coating amount and sites having a small coating amount exist in a plane of the negative electrode active material layer. Since SOC is increased with respect to a predetermined charge capacity in the sites having a small coating amount, expansion more easily occurs. Therefore, the electrode thickness becomes larger compared with the sites having a large coating amount. According to this, since the interelectrode distance between the positive electrode and the negative electrode becomes shorter in the sites having a small coating amount, resistance becomes smaller and the amount of current becomes larger so that reaction is accelerated and non-uniformity of the reaction occurs in a plane of the negative electrode active material layer. Since the acceleration of the side reaction with an electrolyte solution, acceleration of degradation of the active material, and the closings of the pores of the separator occur in sites having a large amount of reaction, the cycle durability of the battery is degraded. In an existing battery which is not a large-sized battery, by concurrently using the Si material + the carbon material described in Patent Literature 1, the cycle durability of the battery was not degraded, and thus the above-described problem did not occur. That is, it was found that the above-described problem is new peculiar one occurring only in a case where the Si material + the carbon material are concurrently used and the battery is a large-sized battery having a large capacity and a large area. Regarding such a peculiar problem, it is considered that a variation in amount of expansion of Si material at the time of charging in a plane of the negative electrode active material layer is decreased by controlling the variation in dispersibility of the Si material and the carbon material described above within 5% in a case where the Si material + the carbon material are concurrently used and the battery is a large-sized battery, and thus the above-described problem can be solved. According to this, it can be said that the cycle durability of the battery can be significantly improved. Herein, further, when the variation in coating amount per unit area is set within 5%, in the case of the large-sized battery having a large capacity and a large area, the variation in amount of expansion per unit area at the time of charging in a plane of the negative electrode active material layer can be further decreased. According to this, the phenomenon that non-uniformity of reactivity with Li ions is caused by the interelectrode distance between the positive electrode and the negative electrode being increased in a certain site and being decreased in a certain site is suppressed. Thus, the side reaction with an electrolyte solution, degradation of the active material, the closing of the pores of the separator, and the like can also be effectively suppressed. As a result, it can be said that further improvement in cycle durability of the battery is achieved.

The variation in coating amount per unit area of the negative electrode active material layer at a plurality of selected sites in a case where a plurality of arbitrary places is selected in a plane of the negative electrode active material layer is preferably within 5%, more preferably within 3%, and further preferably within 2%. When the variation in coating amount per unit area is set within the above-described suitable range, the cycle durability of the battery can be further improved. The lower limit of the variation in coating amount per unit area is not particularly limited, but from the viewpoint of productivity, is 0.1% or more, for example. In addition, when the variation in coating amount per unit area is in a range of 0.1% or more, the effect of improving the cycle durability according to the degree of a decrease in variation may be significantly obtained.

As the arbitrary places in a plane of the negative electrode active material layer, from the viewpoint of measuring the variation in coating amount in a plane of the negative electrode active material layer, arbitrary places may be selected so as to include the vicinity of an end portion, the vicinity of a center portion, and the vicinity of an intermediate portion between the end portion and the center portion in a plane of the negative electrode active material layer in a balanced manner.

Regarding the arbitrary places in a place of the negative electrode active material layer, a plurality of arbitrary places (two or more) may be selected, but from the viewpoint of measuring the variation in coating amount in a plane of the negative electrode active material layer as described above, five or more arbitrary places are preferable. Specifically, for example, places obtained by equally dividing a diagonal line (dashed-dotted line) in a plane of the negative electrode active material layer into six illustrated in Fig. 3(a) (places marked with number symbols 1 to 5 in Fig. 3(a)), or the like can be appropriately selected so as to include the vicinity of the end portion, the vicinity of the center portion, and the vicinity of the intermediate portion between the end portion and the center portion in a surface of the negative electrode active material layer in a balanced manner. However, the arbitrary place is not limited to the places illustrated in Fig. 3 (a), but may further include places obtained by equally dividing another diagonal line crossing the diagonal line illustrated in Fig. 3(a) into six (or more). Alternatively, places obtained by equally dividing an axis line in a longitudinal direction and an axis line in a shorter direction, which pass through the center point in a plane of the negative electrode active material layer, appropriately into three or more may be selected, and there is no particular limitation as long as the vicinity of the end portion, the vicinity of the center portion, and the vicinity of the intermediate portion between the end portion and the center portion in a plane of the negative electrode active material layer are included in a balanced manner.

(Calculation Method of Variation (%) in Coating Amount per Unit Area)

A method of calculating the variation (%) in coating amount per unit area is not limited, but for example, the weight of the negative electrode coated with the negative electrode active material layer and then dried is measured, and then the coating amount per unit area is obtained. A maximum coating amount and a minimum coating amount of coating amounts per unit area in a plurality of measured places were obtained, and a ratio of a larger value of absolute values of a difference between those values and a negative electrode designed coating amount set to be 1.2 times the capacity ratio with respect to the positive electrode to the negative electrode designed coating amount was designated as variation.

$$\text{Variation (\%) in coating amount per unit area in a plane of the negative electrode active material layer}$$

$$= \frac{[\text{Larger value of an absolute value of a difference between the maximum coating amount and the negative electrode designed coating amount or an absolute value between the minimum coating amount and the negative electrode designed coating amount } (mg/cm^2)]}{[\text{Negative electrode designed coating amount } (mg/cm^2)]} \times 100$$

Incidentally, the variation in coating amount per unit area described above has been described using one sheet of the negative electrode, but from the viewpoint of increasing the accuracy of electrode dispersibility, preferably, similar variation measurement is preferably performed for a plurality of sheets. Specifically, three sheets or more are preferable, five sheets or more are more preferable, and seven sheets or more are further preferable.

In order to control a variation in coating amount per unit area, mainly, the solid content ratio of the slurry, the dispersing time when the slurry is dispersed, or the number of rotations may be changed to adjust the variation. Alternatively, mainly, the type of a mixer, or the like may be changed to adjust the variation, and thus there is no particular limitation. Preferably, when the negative electrode active material (water-based) slurry is prepared, first, an aqueous solution of a thickener such as a carboxymethyl cellulose sodium salt is mixed preferably in plural times with the negative electrode active material, the conductive aid, and the like, for example, the solid content ratio of the slurry is gradually decreased under stirring for 2 minutes or longer in total. Thereafter, a binder such as styrene-butadiene rubber is added thereto and is stirred to obtain a negative electrode active material slurry.

(Variation in Capacity per Unit Area)

In the present embodiment, a variation in capacity per unit area of the negative electrode active material layer at a plurality of selected sites in a case where a plurality of arbitrary places is selected in a plane of the negative electrode active material layer is preferably within 5%. In a case where the Si material and the carbon material are used as the negative electrode active materials and the battery is a large-sized battery having a large capacity and a large area, the difference in amount of expansion per unit area tends to be increased according to expansion and contraction of the negative electrode active material layer at the time of charging and discharging in a case where sites having a large capacity and sites having a small capacity exist in a plane of the negative electrode active material layer. As a result, the reaction becomes non-uniform, and thus the cycle durability of the battery is degraded. As described above, in the case of the large-sized battery using the Si material and the carbon material concurrently and further having a large capacity and a large area, by controlling the variation in dispersibility of the Si material and the carbon material described above within 5%, the variation in amount of expansion of the Si material at the time of charging in a plane of the negative electrode active material layer becomes smaller, and thus the cycle durability can be significantly improved. Herein, further, by setting the variation in capacity per unit area within 5%, non-uniformity of reactivity with Li ions can be further suppressed. As a result, it can be said that further improvement in the cycle durability of the battery is achieved.

The variation in capacity per unit area of the negative electrode active material layer at a plurality of selected sites in a case where a plurality of arbitrary places is selected in a plane of the negative electrode active material layer is preferably within 5%, more preferably within 3%, and further preferably within 2%. When the variation in capacity per unit area is set within the above-described suitable range, the cycle durability of the battery can be further improved. The lower limit of the variation in capacity per unit area is not particularly limited, but from the viewpoint of productivity, is 0.1% or more, for example.

As the arbitrary places in a plane of the negative electrode active material layer, from the viewpoint of measuring the variation in capacity in a plane of the negative electrode active material layer, arbitrary places may be selected so as to include the vicinity of the end portion, the vicinity of the center portion, and the vicinity of the intermediate portion between the end portion and the center portion in a plane of the negative electrode active material layer in a balanced manner. The variation in capacity per unit area of the negative electrode active material layer at the selected plurality of sites can be measured by a method described in Examples.

Incidentally, the variation in capacity per unit area has been described using one sheet of the negative electrode, but from the viewpoint of increasing the accuracy of electrode dispersibility, preferably, similar variation measurement is preferably performed for a plurality of sheets. Specifically, three sheets or more are preferable, five sheets or more are more preferable, and seven sheets or more are further preferable.

In order to control a variation in capacity per unit area, mainly, the solid content ratio of the slurry, the dispersing time when the slurry is dispersed, or the number of rotations may be changed to adjust the variation. Alternatively, mainly, the type of a mixer, or the like may be changed to adjust the variation, and thus there is no particular limitation. Preferably, when the negative electrode active material (water-based) slurry is prepared, first, an aqueous solution of a thickener such as a carboxymethyl cellulose sodium salt is mixed preferably in plural times with the negative electrode active material, the conductive aid, and the like, for example, the solid content ratio of the slurry is gradually decreased under stirring for 2 minutes or longer in total. Thereafter, a binder such as styrene-butadiene rubber is added thereto and is stirred to obtain a negative electrode active material slurry.

Further, the average particle diameter of the carbon material is not particularly limited, but D50 of the secondary particle diameter is preferably 5 to 50 $\mu$m and more preferably 5 to 25 $\mu$m. Herein, as the secondary particle diameter of the carbon material, a value obtained by a laser diffraction method is used. At this time, compared to the average particle diameter of the aforementioned Si material, the average particle diameter of the carbon material may be the same or different from the average particle diameter of the Si material, but is preferably different from that of the Si material. The average particle diameter of the Si material is more preferably smaller than the average particle diameter of the carbon material. Further, the ratio A/C of D50 (A ($\mu$m)) of the secondary particle diameter of the Si material to D50 (C ($\mu$m)) of the secondary particle diameter of the carbon material is preferably less than 0.5 and more preferably 0.3 or less. When D50 (C) of the secondary particle diameter of the carbon material is relatively larger than D50 (A) of the secondary particle diameter of the Si material, it is possible to have a configuration in which particles of the carbon material are uniformly arranged and the Si material is disposed between the particles of the carbon material, and thus the Si material can be uniformly arranged in the negative electrode active material layer. In addition, in a case where the particle diameter of the Si material having a relatively large capacity is the same as the particle diameter of the carbon material having a small capacity, a variation in capacity distribution in a plane of the negative electrode active material layer easily occurs even when the particles are uniformly dispersed apparently. Therefore, by decreasing the particle diameter of the Si material having a relatively large capacity, it is possible to reduce a variation in capacity in a plane of the negative electrode active material layer. The lower limit of A/C is not particularly limited, and for example, is 0.01 or more.

Further, in the non-aqueous electrolyte secondary battery of the present invention, the ratio B/D of D90 (B ($\mu$m)) of the secondary particle diameter of the Si material to the thickness D ($\mu$m) of the negative electrode active material layer is preferably less than 0.5 and more preferably 0.2 or less. Since the Si material is five times or more harder than the carbon material, when the particle diameter of the Si material is large, only the sites having a large amount of the Si material are not compressed at the time of pressing when the negative electrode active material layer is coated and then pressed, and this may cause a variation in thickness. In addition, when the pressing pressure is too high, the Si material is not compressed, a physical damage is applied to the carbon material to break the carbon material, and this causes a degradation in durability in some cases. However, when the ratio B/D of D90 (B ($\mu$m)) of the secondary particle diameter of the Si material to the thickness D ($\mu$m) of the negative electrode active material layer is less than 0.5, since the size of the Si material is smaller than the thickness of the negative electrode active material layer, a negative electrode active material layer having a uniform thickness can be easily formed, and excellent cycle durability may be obtained. The lower limit of B/D is not particularly limited, but is 0.001 or more, for example.

The porosity of the negative electrode active material layer is in a range of 10 to 45% by volume, preferably 15 to 40% by volume, and more preferably 20 to 35% by volume, with respect to the total volume of the negative electrode active material layer. The reason for this is that, when the porosity is in the above range, pores of the active material layer can effectively function as a path of supplying an electrolyte solution (Li$^+$ ions) to immerse an electrolyte solution into the inside of the active material layer and accelerate an electrode reaction without impairing characteristics such as battery capacity or strength.

In the present invention, the density of the negative electrode active material layer is not particularly limited, but from the viewpoint of increasing the density, the density of the negative electrode active material layer is preferably 1.5 to 1.8 g/cm$^3$ and more preferably 1.5 to 1.7 g/cm$^3$.

The coating amount (basis weight) of the negative electrode active material layer on one surface is not particularly limited, but is preferably 5 to 20 mg/cm$^2$ and more preferably 8 to 15 mg/cm$^2$. When the coating amount of the negative electrode active material layer on one surface is 20 mg/cm$^2$ or less, the rate characteristics of the battery may be improved. On the other hand, when the coating amount of the negative electrode active material layer on one surface is 5 mg/cm$^2$ or more, a sufficient capacity can be ensured.

The thickness of the negative electrode active material layer (active material layer on one surface of a current collector) is not particularly limited as well, and reference can be suitably made to the conventionally known knowledge about a battery. For example, the thickness of the negative electrode active material layer is typically about 1 to 500 $\mu$m and preferably 2 to 100 $\mu$m, considering the purpose of use (for example, focused on output or focused on energy, or the like) of a battery or ion conductivity.

<Current Collector>

The current collector (11, 12) is made of an electrically conductive material. The size of the respective current collector is determined depending on the use of application of the battery. For example, a current collector having a large area is used for a large size battery for which a high energy density is required.

The thickness of the current collector is not particularly limited as well. The thickness of the current collector is typically about 1 to 100 $\mu$m.

The shape of the respective current collector is not particularly limited as well. The laminate type battery 10 illustrated in Fig. 1 can use a mesh-shaped current collector (such as an expanded grid) or the like as well as a current collecting foil.

The material constituting the current collector is not particularly limited. For example, a metal or a resin in which an electrically conductive filler is added to an electrically conductive polymer material or a non-electrically conductive polymer material may be adopted.

Specific examples of the metal include aluminum, nickel, iron, stainless steel, titanium, and copper. Other than these, a clad material of nickel and aluminum, a clad material of copper and aluminum, or a plating material of a combination of these metals can be preferably used. In addition, the metal may be a foil obtained by coating aluminum on a metal surface. Among them, from the viewpoint of electron conductivity, potential for operating a battery, adhesiveness of the negative electrode active material to the current collector by sputtering, and the like, aluminum, stainless steel, copper, and nickel are preferable.

Further, examples of the electrically conductive polymer material include polyaniline, polypyrrole, polythiophene, polyacetylene, polyparaphenylene, polyphenylene vinylene, polyacrylonitrile, and polyoxadiazole. Such an electrically conductive polymer material has the advantage in simplification of the manufacturing process and lightness of the current collector since the electrically conductive polymer material has sufficient electric conductivity even if an electrically conductive filler is not added thereto.

Examples of the non-electrically conductive polymer material include polyethylene (PE; such as high-density polyethylene (HDPE) or low-density polyethylene (LDPE)), polypropylene (PP), polyethylene terephthalate (PET), polyether nitrile (PEN), polyimide (PI), polyamide imide (PAI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinyl chloride (PVC), polyvinylidene fluoride (PVdF), and polystyrene (PS) . Such a non-electrically conductive polymer material may have excellent potential resistance or solvent resistance.

An electrically conductive filler may be added to the electrically conductive polymer material or the non-electrically conductive polymer material described above, as necessary. In particular, when the resin serving as a substrate of the current collector consists only of a non-electrically conductive polymer, the electrically conductive filler is essential to impart electric conductivity to the resin.

The electrically conductive filler is not particularly limited as long as it is a substance having electric conductivity. Examples of a material excellent in electric conductivity, potential resistance, or lithium ion insulation characteristics include metal and electrically conductive carbon. The metal is not particularly limited; however, the metal is preferably at least one element selected from the group consisting of Ni, Ti, Al, Cu, Pt, Fe, Cr, Sn, Zn, In, Sb, and K, or an alloy or metal oxide containing these metals. Further, the electrically conductive carbon is not particularly limited. The electrically conductive carbon is preferably at least one material selected from the group consisting of acetylene black, Vulcan, Black Pearl, carbon nanofiber, Ketjen black, carbon nanotube, carbon nanohorn, carbon nanoballoon, and fullerene.

The adding amount of the electrically conductive filler is not particularly limited as long as it imparts sufficient electric conductivity to the current collectors. In general, the amount thereof is about 5 to 35% by mass.

<Separator (Electrolyte Layer)>

A separator has a function of maintaining an electrolyte to ensure lithium ion conductivity between the positive electrode and the negative electrode and a function of a partition wall between the positive electrode and the negative electrode.

Examples of the separator shape may include a porous sheet separator and a non-woven separator composed of a polymer or a fiber which absorbs and maintains the electrolyte.

As the porous sheet separator composed of a polymer or a fiber, a microporous (microporous membrane) separator can be used, for example. Specific examples of the porous sheet composed of a polymer or a fiber include a microporous (microporous membrane) separator which is composed of a polyolefin such as polyethylene (PE) or polypropylene (PP); a laminate in which a plurality of these is laminated (for example, a laminate having a three-layer structure of PP/PE/PP), and a hydrocarbon-based resin such as polyimide, aramid, or polyvinylidene fluoride-hexafluoropropylene (PVdF-HFP), or glass fiber.

The thickness of the microporous (microporous membrane) separator cannot be uniformly defined as it varies depending on use of application. For example, for an application in a secondary battery for driving a motor of an electric vehicle (EV), a hybrid electric vehicle (HEV), a fuel cell vehicle (FCV), and the like, the thickness is desirably 4 to 60 $\mu$m as a monolayer or a multilayer. The fine pore diameter of the microporous (microporous membrane) separator is desirably 1 $\mu$m or less at most (typically, the pore diameter is about several tens of nanometers).

As the non-woven separator, conventionally known ones such as cotton, rayon, acetate, nylon, and polyester; polyolefin such as PP or PE; polyimide and aramid are used singly or as a mixture. In addition, the bulk density of the non-woven fabric is not particularly limited as long as sufficient battery characteristics are obtained by an impregnated electrolyte. Furthermore, it is sufficient that the thickness of the non-woven separator is the same as that of the electrolyte layer, and the thickness is preferably 5 to 200 $\mu$m and particularly preferably 10 to 100 $\mu$m.

In addition, as described above, the separator contains an electrolyte. The electrolyte is not particularly limited as long as it can exhibit such functions, but a liquid electrolyte or a gel polymer electrolyte is used. By using the gel polymer electrolyte, a distance between electrodes is stabilized and an occurrence of polarization is suppressed so that the durability (cycle characteristics) is improved.

The liquid electrolyte has a function as a carrier of lithium ion. The liquid electrolyte constituting the electrolyte solution layer has a form in which a lithium salt is dissolved in an organic solvent as a plasticizer. Examples of the organic solvent which can be used include carbonates such as ethylene carbonate (EC), propylene carbonate (PC), dimethyl carbonate (DMC), diethyl carbonate (DEC), and ethyl methyl carbonate. Further, as the lithium salt, a compound which can be added to an active material layer of an electrode, such as Li(CF$_3$SO$_2$)$_2$N, Li(C$_2$F$_5$SO$_2$)$_2$N, LiPF$_6$, LiBF$_4$, LiClO$_4$, LiAsF$_6$, LiTaF$_6$, and LiCF$_3$SO$_3$, can be adopted in the same manner. The liquid electrolyte may further contain an additive in addition to the aforementioned components. Specific examples of such a compound include vinylene carbonate, methylvinylene carbonate, dimethylvinylene carbonate, phenylvinylene carbonate, diphenylvinylene carbonate, ethylvinylene carbonate, diethylvinylene carbonate, vinylethylene carbonate, 1,2-divinylethylene carbonate, 1-methyl-1-vinylethylene carbonate, 1-methyl-2-vinylethylene carbonate, 1-ethyl-1-vinylethylene carbonate, 1-ethyl-2-vinylethylene carbonate, vinylvinylene carbonate, allylethylene carbonate, vinyloxymethylethylene carbonate, allyloxymethylethylene carbonate, acryloxymethylethylene carbonate, methacryloxymethylethylene carbonate, ethynylethylene carbonate, propargylethylene carbonate, ethynyloxymethylethylene carbonate, propargyloxyethylene carbonate, methylene ethylene carbonate, and 1,1-dimethyl-2-methylene ethylene carbonate. Among them, vinylene carbonate, methylvinylene carbonate, and vinylethylene carbonate are preferable, and vinylene carbonate and vinylethylene carbonate are more preferable. These cyclic carbonate esters may be used singly or two or more kinds thereof may be used concurrently.

The gel polymer electrolyte has a configuration that the above-described liquid electrolyte is injected to a matrix polymer (host polymer) consisting of an ion conductive polymer. Use of a gel polymer electrolyte as an electrolyte is excellent in that the fluidity of an electrolyte disappears and ion conductivity between layers is blocked. Examples of the ion conductive polymer which is used as the matrix polymer (host polymer) include polyethylene oxide (PEO), polypropylene oxide (PPO), polyethylene glycol (PEG), polyacrylonitrile (PAN), polyvinylidene fluoride-hexafluoropropylene (PVdF-HEP), polymethyl methacrylate (PMMA), and a copolymer thereof.

According to forming of a cross-linked structure, the matrix polymer of a gel electrolyte can exhibit excellent mechanical strength. For forming a cross-linked structure, it is sufficient to perform a polymerization treatment of a polymerizable polymer for forming a polymer electrolyte (for example, PEO or PPO), such as thermal polymerization, UV polymerization, radiation polymerization, or electron beam polymerization, by using a suitable polymerization initiator.

Further, as the separator, a separator in which a heat resistant insulating layer is laminated on a porous substrate (a separator with a heat resistant insulating layer) such as a porous sheet separator or a non-woven separator is preferable. The heat resistant insulating layer is a ceramic layer containing inorganic particles and a binder. As the separator with a heat resistant insulating layer, those having high heat resistance, that is, a melting point or a heat softening point of 150°C or higher and preferably 200°C or higher are used. By having the heat resistant insulating layer, internal stress of the separator which increases when the temperature increases is alleviated so that the effect of suppressing thermal shrinkage can be obtained. As a result, an occurrence of a short circuit between electrodes of the battery can be prevented so that a battery configuration in which the deterioration in performance due to an increase in temperature hardly occurs is obtained. In addition, by having the heat resistant insulating layer, the mechanical strength of the separator with a heat resistant insulating layer is improved so that the membrane of the separator is hardly broken. Furthermore, because of the effect of suppressing thermal shrinkage and a high mechanical strength, the separator is hardly curled during the manufacturing process of the battery.

The inorganic particles in the heat resistant insulating layer contribute to the mechanical strength or the effect of suppressing thermal shrinkage of the heat resistant insulating layer. The material used as the inorganic particles is not particularly limited. Examples thereof include oxides ($SiO_2$, $Al_2O_3$, $ZrO_2$, and $TiO_2$), hydroxides, and nitrides of silicon, aluminum, zirconium and titanium, and a composite thereof. These inorganic particles may be those which are derived from mineral resources such as boehmite, zeolite, apatite, kaolin, mullite, spinel, olivine, and mica, or those which are artificially synthesized. In addition, these inorganic particles may be used singly or two or more kinds thereof may be used concurrently. Among them, from the viewpoint of cost, it is preferable to use silica ($SiO_2$) or alumina ($Al_2O_3$) and it is more preferable to use alumina ($Al_2O_3$).

The weight per unit area of heat resistant particles is not particularly limited, but is preferably 5 to 15 g/m$^2$. With this range, sufficient ion conductivity is obtained and heat resistant strength is maintained, which is preferable.

The binder in the heat resistant insulating layer has a role to bond the inorganic particles to one another or the inorganic particles to the porous substrate. With this binder, the heat resistant insulating layer is stably formed and peeling between porous substrate and the heat resistant insulating layer.

The binder used in the heat resistant insulating layer is not particularly limited, and for example, compounds such as carboxymethyl cellulose (CMC), polyacrylonitrile, cellulose, an ethylene-vinyl acetate copolymer, polyvinyl chloride, styrene-butadiene rubber (SBR), isoprene rubber, butadiene rubber, polyvinylidene fluoride (PVdF), polytetrafluoroethylene (PTFE), polyvinyl fluoride (PVF), and methyl acrylate may be used as the binder. Among them, carboxymethyl cellulose (CMC), methyl acrylate, or polyvinylidene fluoride (PVdF) is preferably used. Those compounds may be used singly or two or more kinds thereof may be used concurrently.

The content of the binder in the heat resistant insulating layer is preferably 2 to 20% by mass with respect to 100% by mass of the heat resistant insulating layer. When the content of the heat resistant insulating layer is 2% by mass or more, the peeling strength between the heat resistant insulating layer and the porous substrate can be increased and vibration resistance of the separator can be improved. On the other hand, when the content of the binder is 20% by mass or less, a gap between inorganic particles is maintained at an appropriate level so that sufficient lithium ion conductivity can be ensured.

The thermal shrinkage rate of the separator with a heat resistant insulating layer is preferably 10% or less in both MD and TD after being held for 1 hour under the condition of 150°C and 2 gf/cm$^2$. Shrinkage of the separator can be effectively prevented even when the internal temperature of the battery reaches 150°C due to an increased amount of heat generated from the positive electrode as such a highly heat resistant material is used. As a result, an occurrence of a short circuit between electrodes of the battery can be prevented so that a battery configuration in which the deterioration in performance due to an increase in temperature hardly occurs is obtained.

<Current Collecting Plate (Tab)>

In the lithium ion secondary battery, a current collecting plate (tab) that is electrically connected to the current collector is taken out of the laminate film as an outer casing material for the purpose of drawing the current to the outside of the battery.

The material constituting the current collecting plate is not particularly limited and a known highly electrical conducting material which is used in the related art as a current collecting plate for a lithium ion secondary battery may be used. As the constituent material of the current collecting plate, for example, a metal material such as aluminum, copper, titanium, nickel, stainless steel (SUS), or an alloy thereof is preferable. From the viewpoint of lightweight, corrosion resistance, and high electrical conductivity, the material is more preferably aluminum or copper and is particularly preferably aluminum. Incidentally, the same material or different materials may be used in the positive electrode current collecting plate (positive electrode tab) and the negative electrode current collecting plate (negative electrode tab).

In addition, the taking out of tabs 58 and 59 illustrated in Fig. 2 is not particularly limited as well. A positive electrode tab 58 and a negative electrode tab 59 may be taken out from the same side or each of the positive electrode tab 58 and the negative electrode tab 59 may be divided into plural tabs and then taken out from each side, and it is not limited to the form illustrated in Fig. 2. In addition, it is also possible to form a terminal, for example, using a barrel can (metal can) instead of a tab in a winding type lithium ion battery.

<Seal Portion>

A seal portion is a unique member for the series laminate type battery and has a function of preventing the leakage of the electrolyte layer. Furthermore, it is also possible to prevent the contact between adjacent current collectors in the battery or the short circuit caused by slight lack of uniformity of the ends of the laminated electrodes.

The constituting material of the seal portion is not particularly limited and a polyolefin resin such as polyethylene or polypropylene, an epoxy resin, rubber, polyimide, and the like may be used. Among these, from the viewpoint of corrosion resistance, chemical resistance, film forming property, economic efficiency, and the like, it is preferable to use a polyolefin resin.

<Positive Electrode Terminal Lead and Negative Electrode Terminal Lead>

A lead that is used in a laminate types secondary battery known in the related art can be used as materials of the negative electrode and the positive electrode terminal lead. Incidentally, a portion taken out from the battery outer casing material is preferably coated with a heat resistant and insulating thermally shrunken tube or the like so that it is not in contact with a peripheral device or wire to cause electric leakage which affects a product (for example, an automobile component, in particular, an electronic device).

<Battery Outer Casing Body>

As the battery outer casing body, a metal can casing conventionally known can be used. Other than this, the power generating element 21 may be packed using a laminate film 29 as the outer casing material as illustrated in Fig. 1. The laminate film may be configured, for example, as a three-layer structure formed by laminating polypropylene, aluminum, and nylon in this order. By using such a laminate film, it is possible to easily perform unsealing of the outer casing material, addition of a capacity restoring material, and re-sealing of the outer casing material. A laminate film is desirable from the viewpoint of an increase in output and excellent cooling performance and of being suitably utilizable in a battery for a large-sized device such as EV or HEV. In addition, an outer casing body formed of a laminate film containing aluminum (for example, an aluminum laminate sheet bag; see Examples) is more preferable since the group pressure applied from the outside to the power generating element can be easily adjusted and thus the thickness of an electrolyte solution layer can be easily adjusted to a desired value. For the laminate film containing aluminum, an aluminum laminate film obtained by laminating the above-described polypropylene, aluminum, and nylon in this order, or the like can be used.

[Cell Size]

Fig. 2 is a perspective view illustrating the appearance of a flat lithium ion secondary battery as a representative embodiment of a secondary battery. According to a preferred embodiment of the present invention, a flat stack type laminate battery having a configuration in which the power generating element is sealed in the battery outer casing body formed of a laminate film containing aluminum such as this lithium ion secondary battery is provided.

As illustrated in Fig. 2, a flat lithium ion secondary battery 50 has a rectangular flat shape, and a positive electrode tab 58 and a negative electrode tab 59 are taken out from both sides for extracting the electric power. A power generating element 57 is covered with a battery outer casing material 52 of the lithium ion secondary battery 50, and the periphery of the battery outer casing material 52 is fused by heat. The power generating element 57 is sealed in a state in which the positive electrode tab 58 and the negative electrode tab 59 are taken out to the outside. Herein, the power generating element 57 corresponds to the power generating element 21 of the lithium ion secondary battery 10 illustrated in Fig. 1 described above. The power generating element 57 is one in which a plurality of single battery layers (single cell) 19, which are each constituted by the positive electrode (positive electrode active material layer) 15, the electrolyte layer 17, and the negative electrode (negative electrode active material layer) 13, is laminated.

Incidentally, the lithium ion secondary battery is not limited to those having a flat shape of a laminate type. The winding type lithium ion secondary battery may be those having a barrel shape or those having a rectangular flat shape obtained by modifying those having a barrel shape, and it is not particularly limited. A laminate film may be used as the outer casing material of those having a barrel shape, and a barrel can (metal can) of the related art may be used, and it is not particularly limited. Preferably, the power generating element is encased with an aluminum laminate film. Weight saving can be attained by such a form.

In addition, the taking out of the tabs 58 and 59 illustrated in Fig. 2 is not particularly limited as well. The positive electrode tab 58 and the negative electrode tab 59 may be taken out from the same side or each of the positive electrode tab 58 and the negative electrode tab 59 may be divided into plural tabs and then taken out from each side, and it is not limited to the form illustrated in Fig. 2. In addition, it is also possible to form a terminal, for example, using a barrel can (metal can) instead of a tab in a winding type lithium ion battery.

A general electric vehicle has a battery storage space of about 170 L. A cell and an auxiliary machine such as a device for controlling charge and discharge are stored in this space, and thus the storage space efficiency of a cell is typically about 50%. The cell loading efficiency into this space is a factor to determine the cruising distance of an electric vehicle. The loading efficiency is impaired as the size of the single cell decreases, and thus it is not possible to secure the cruising distance.

Therefore, in the present invention, the battery structure of which the power generating element is covered with an outer casing body preferably has a large size. Specifically, it is preferable that the negative electrode active material layer has a rectangle shape (rectangular shape) and the length of the short side of the rectangle is 100 mm or more. Such a large-sized battery can be used in a vehicle use. Herein, the length of the short side of the negative electrode active material layer refers to the length of the shortest side of each electrode. The upper limit of the length of the short side is not particularly limited, but is typically 400 mm or less.

[Volume Energy Density and Rated (Discharge) Capacity]

In consideration of a driving distance (cruising distance) of the electric vehicle per single charge, the volume energy density of the battery is preferably 157 Wh/L or more and the rated capacity is preferably 20 Ah or more.

Herein, an increase in size of a battery is defined from the relation of the battery volume or the battery capacity (rated capacity) as the viewpoint of a large-sized battery that is different from the viewpoint of the physical size of the electrode. Specifically, the non-aqueous electrolyte secondary battery according to the present embodiment is characterized in that a ratio value of a battery volume (a product of a projected area and a thickness of the battery including a battery outer casing body) to a rated capacity of 10 $cm^3$/Ah or less and a rated capacity of 3 Ah or more. This large-sized battery is defined as a battery in which the battery capacity per unit volume is large (10 Ah/$cm^3$ or more), in other words, the battery volume per unit volume (the ratio of the battery volume to the rated capacity) is small (10 $cm^3$/Ah or less), and the battery capacity (rated capacity) is large (3 Ah or more) . This is also that a large-sized battery which has a large capacity and expands more largely than ever before is defined by concurrently using the Si material and the carbon material in the negative electrode active material, as it were.

In a case where the ratio value of the battery volume (the product of the projected area and the thickness of the battery including the battery outer casing body) to the rated capacity is more than 10 $cm^3$/Ah, the influence of the variation is small even when the variation occurs since the capacity is small, and as described above, since the problem to be solved by the present invention does not occur in the first place, it can be said that the solving means thereof is not necessary to apply. Incidentally, the ratio value of the battery volume (the product of the projected area and the thickness of the battery including the battery outer casing body) to the rated capacity may be less than 2 $cm^3$/Ah, but expansion is large and the influence of structural collapse other than the variation is significant. In addition, in the present embodiment, the negative electrode active material having a small amount of Si material is used, and it is not easy to increase the battery capacity per unit volume. Further, in a case where the rated capacity is less than 3 Ah, the capacity is small and the influence of the variation is small. In addition, the rated capacity is not sufficient for the large-sized battery.

The upper limit of the ratio value of the battery volume (the product of the projected area and the thickness of the battery including the battery outer casing body) to the rated capacity is preferably 8 cm$^3$/Ah or less. Meanwhile, the lower limit of the ratio value of the battery volume (the product of the projected area and the thickness of the battery including the battery outer casing body) to the rated capacity is not particularly limited, but the lower limit thereof may be 2 cm$^3$/Ah or more and is preferably 3 cm$^3$/Ah or more. Further, the rated capacity is preferably 5 Ah or more, more preferably 10 Ah or more, further preferably 15 Ah or more, and particularly preferably 20 Ah or more, and of them, preferably 25 Ah or more. In this way, a decrease in cycle characteristics caused by the occurrence of the local non-uniformity of reaction with the variation in dispersibility of the Si material and the carbon material in a plane of the electrode is observed only by a battery having a large area and a large capacity. On the other hand, in the case of a battery, which does not have a large area and a large capacity as described above, such as a consumer battery of the related art, a decrease in cycle characteristics caused by the occurrence of the local non-uniformity of reaction according to the variation is not observed even when the variation in dispersibility of the Si material and the carbon material in a plane of the electrode exists.

The rated capacity of the battery is calcurated as follows.

<<Measurement of Rated Capacity>>

An electrolyte solution is injected to a testing battery, and then maintained for about 10 hours. Thereafter, the rated capacity is measured by the following procedures 1 to 5 at a temperature of 25°C and in a voltage range of 3.0 V to 4.15 V. Incidentally, regarding a commercially available battery (product), since 10 hours or longer lapses after injection of the electrolyte solution, the rated capacity may be obtained by performing procedures 1 to 5.

Procedure 1: After the voltage reaches 4.15 V at a constant current charge of 0.1 C, rest for 5 minutes.

Procedure 2: Following the procedure 1, charge for 1.5 hours at a constant voltage charge, and rest for 5 minutes.

Procedure 3: After the voltage reaches 3.0 V by a constant current discharge of 0.1 C, discharge for 2 hours at a constant voltage discharge, and then rest for 10 seconds.

Procedure 4: After the voltage reaches 4.1 V by a constant current charge of 0.1 C, charge for 2.5 hours at a constant voltage charge, and then rest for 10 seconds.

Procedure 5: After the voltage reaches 3.0 V by a constant current discharge of 0.1 C, discharge for 2 hours at a constant voltage discharge, and then stop for 10 seconds.

Rated capacity: Discharge capacity in discharge from constant current discharge to constant voltage discharge (CCCV discharge capacity) in the procedure 5 is regarded as the rated capacity.

The battery volume is calcurated from the product of the projected area and the thickness of the battery including the battery outer casing body. Of them, regarding the projected area of the battery including the battery outer casing body, six projected areas of the front surface, the rear surface, the right lateral surface, the left lateral surface, the planar surface, and the bottom surface of the battery are obtained, but it is sufficient to use the largest projected area of the battery of these projected areas, and in general, the projected area is the projected area of the planar surface or bottom surface of the battery when the battery is placed on a flat plate in the most stable state. In addition, regarding the thickness of the battery including the battery outer casing body, the thickness at the time of full charge is measured. Further, since the thickness of the battery including the battery outer casing body is a large area, thicknesses at eight sites or more are measured and a value obtained by averaging the thicknesses is used in consideration of a variation caused by measurement sites. For example, in Examples, the thicknesses of the battery including the battery outer casing body at sites indicated by number symbols 1 to 9 illustrated in Fig. 2 or in the vicinity thereof are measured and a value obtained by averaging the thicknesses is used.

Further, the aspect ratio of a rectangular electrode is preferably 1 to 3 and more preferably 1 to 2. Incidentally, the aspect ratio of the electrode is defined as the length/width ratio of a positive electrode active material layer with a rectangular shape. When the aspect ratio is in this range, an advantage of having both the performance required for a vehicle and mounting space can be achieved.

<Method for Producing Lithium Ion Secondary Battery>

The method for producing a lithium ion secondary battery is not particularly limited, and the lithium ion secondary battery may be produced by a known method. Specifically, the method includes (1) fabrication of electrodes, (2) fabrication of the single battery layer, (3) fabrication of the power generating element, and (4) production of the laminate type battery. Hereinafter, the method for producing a lithium ion secondary battery will be described by taking an example but is not limited thereto.

(1) Fabrication of Electrodes (Positive Electrode and Negative Electrode)

The electrode (positive electrode or negative electrode) may be fabricated, for example, by preparing an active material slurry (positive electrode active material slurry or negative electrode active material slurry), coating the active material slurry on a current collector, and drying and then pressing the resultant product. The active material slurry contains the active material (positive electrode active material or negative electrode active material) described above, a binder (in the case of using an aqueous binder at the negative electrode side, it is desirable to concurrently use a thickener), a conductive aid, and a solvent. Herein, in order to control a variation in dispersibility of the Si material and the carbon material in a plane of the negative electrode active material layer, for example, a vibration time, an ultrasonic wavelength, or the like when stirring is performed using ultrasonic vibration at the time of producing the negative electrode active material (water-based) slurry may be changed to adjust the variation. In addition, mainly, a dispersing (mixing under stirring) time or the like at the time of producing the negative electrode active material (water-based) slurry may be changed to adjust the variation. Alternatively, for example, mainly, the type of a dispersing mixer may be changed to adjust the variation, and thus there is no particular limitation. Preferably, when a negative electrode active material (water-based) slurry is prepared, first, an aqueous solution of a thickener such as a carboxymethyl cellulose sodium salt is mixed with the negative electrode active material, the conductive aid, and the like in several batches and stirred so as to gradually decrease the solid content ratio of the slurry. Thereafter, a binder such as styrene-butadiene rubber is added and stirred thereto, thereby obtaining a negative electrode active material slurry.

The solvent is not particularly limited, and N-methyl-2-pyrrolidone (NMP), dimethyl formamide, dimethyl acetamide, methyl formamide, cyclohexane, hexane, water, and the like may be used.

An aqueous solvent used in the fabrication of the negative electrode active material (water-based) slurry is not particularly limited, but conventionally known aqueous solvent can be used. For example, it is possible to use water (pure water, ultrapure water, distilled water, ion-exchanged water, ground water, well water, service water (tap water), and the like), a mixed solvent of water and an alcohol (for example, ethyl alcohol, methyl alcohol, isopropyl alcohol, or the like), or the like. However, in the present embodiment, the aqueous solvent is not limited thereto, but it is possible to appropriately select and use an aqueous solvent that is conventionally known as long as the working effects of the present embodiment are not impaired. These may be used singly or as a mixture of two or more kinds thereof.

The method for coating the active material slurry on the current collector is not particularly limited, and examples thereof include a screen printing method, a spray coating method, an electrostatic spray coating method, an ink jet method, and a doctor blade method.

The method for drying the coating film formed on the surface of the current collector is not particularly limited as long as at least a part of the solvent in the coating film is removed. Examples of the drying method include heating. The drying conditions (drying time, drying temperature, and the like) may be appropriately set depending on the volatilization rate of the solvent contained in the active material slurry to be applied, the coating amount of the active material slurry, and the like. Incidentally, a part of the solvent may remain. The remaining solvent may be removed in the pressing process or the like described below.

The pressing means is not particularly limited, and for example, a calendar roll, a flat press, and the like may be used.

(2) Fabrication of Single Battery Layer

The single battery layer may be fabricated by laminating the electrodes (positive electrode and negative electrode) fabricated in (1) via a separator (electrolyte layer).

(3) Fabrication of Power Generating Element

The power generating element may be fabricated by laminating the single battery layers in appropriate consideration of the output and capacity of the single battery layer, and the output, capacity, and the like that are required for a battery.

(4) Production of Laminate Type Battery

As the configuration of the battery, it is possible to employ various kinds of shapes such as a square shape, a paper type, a laminate type, a cylindrical type, and a coin type. In addition, the current collector, an insulating plate, and the like of the constituent components are not particularly limited and may be selected according to the above shape. However, a laminate type battery is preferable in the present embodiment. In the laminate type battery, the lead is joined to the current collector of the power generating element obtained above and this positive electrode lead or negative electrode lead is joined to the positive electrode tab or the negative electrode tab. Thereafter, the power generating element is introduced into the laminate sheet such that the positive electrode tab and the negative electrode tab are exposed to the outside of the battery, the electrolyte solution is injected by an injecting machine, and the laminate sheet is sealed in a vacuum, such that the laminate type battery can be produced.

(5) Activation Treatment or the Like

In the present embodiment, from the viewpoint of improving performance and durability of the laminate type battery obtained above, an initial charge treatment, a gas removing treatment, an activation treatment, and the like may be further performed under the following conditions as necessary. In this case, in order to be able to perform the gas removing treatment, in the above (4) Production of laminate type battery, three sides of the laminate sheet (outer casing material) are completely sealed (main sealing) at the time of sealing by thermocompression bonding into a rectangular shape, and the remaining one side is temporarily sealed by thermocompression bonding. The remaining one side may be freely opened or closed, for example, by clipping or the like. However, it is preferable to temporarily seal the one side by thermocompression bonding from the viewpoint of mass production (production efficiency). This is because this case only requires adjusting the temperature and the pressure for bonding. In a case where the side is temporarily sealed by thermocompression bonding, the side can be unsealed by applying a slight pressure. After degassing, the side may be temporarily sealed again by thermocompression bonding. Finally, the side can be completely sealed (main sealing) by thermocompression bonding.

(Initial Charge Treatment)

It is preferable to perform an aging treatment of the battery as follows. Charging is performed at 25°C at 0.05 C for 4 hours (SOC: about 20%) by a constant current charging method. Subsequently, the battery is charged at 25°C with a rate of 0.1 C to 4.45 V. Thereafter, charging is stopped, and the battery is allowed to stand in the state (SOC: about 70%) for about 2 days (48 hours).

(Initial (First) Gas Removing Treatment)

Next, as the initial (first) gas removing treatment, the following treatment is performed. First, the one side temporarily sealed by thermocompression bonding is unsealed. Gas is removed at $10 \pm 3$ hPa for 5 minutes. Thereafter, the one side is subjected to thermocompression bonding again to perform temporary sealing. In addition, pressure molding (contact pressure: $0.5 \pm 0.1$ MPa) is performed using a roller to make the electrode adhere to the separator sufficiently.

(Activation Treatment)

Next, as the activation treatment method, the following electrochemical pretreatment method is performed.
First, two cycles of charging at 25°C at 0.1 C until the voltage becomes 4.45 V by a constant current charging method and then discharging at 0.1 C to 2.0 V are performed. Similarly, one cycle of charging at 25°C at 0.1 C until the voltage becomes 4.55 V by a constant current charging method and then, discharging at 0.1 C to 2.0 V, and one cycle of charging at 0.1 C until the voltage becomes 4.65 V and then discharging at 0.1 C to 2.0 V are performed. Furthermore, one cycle of charging at 25°C at 0.1 C until the voltage becomes 4.75 V by a constant current charging method and then discharging at 0.1 C to 2.0 V may be performed.
Incidentally, Herein, as the activation treatment method, an electrochemical pretreatment method in which the constant current charging method is used and the voltage is used as a stop condition has been described as an example. However, as the charging method, a constant current constant voltage charging method may be used. In addition to the voltage, an amount of electric charge or time may be employed as the stop condition.

(Last (Second) Gas Removing Treatment)

Next, as the last (second) gas removing treatment, the following treatment is performed. First, the one side temporarily sealed by thermocompression bonding is unsealed. Gas is removed at $10 \pm 3$ hPa for 5 minutes. Thereafter, the one side is subjected to thermocompression bonding again to perform main sealing. Further, pressure molding (contact pressure: $0.5 \pm 0.1$ MPa) is performed using a roller to make the electrode adhere to the separator sufficiently.
In the present embodiment, it is possible to enhance performance and durability of the obtained battery by performing the above-described initial charge treatment, gas removing treatment, and activation treatment.

[Assembled Battery]

An assembled battery is constituted by connecting plural batteries. Specifically, the assembled battery is one which is constituted by connecting at least two or more batteries in series, in parallel, or in series and parallel. It is possible to freely control the capacity and voltage by connecting the batteries in series and in parallel.

It is also possible to form a detachable small-sized assembled battery by connecting plural batteries in series or in parallel. Moreover, by further connecting plural detachable small-sized assembled batteries in series or parallel, it is possible to form an assembled battery having a high capacity and a high output which is suitable as a power source or auxiliary power source for driving a vehicle requiring a high volume energy density and a high volume output density. The number of the connected batteries for fabricating an assembled battery or the number of the stacked small-sized assembled batteries for fabricating an assembled battery having a high capacity may be determined depending on the capacity or output of the battery that is mounted to a vehicle (electric vehicle).

[Vehicle]

The non-aqueous electrolyte secondary battery of the present invention including the lithium ion secondary battery according to the present embodiment can maintain a discharge capacity even being used for a long period of time and thus exhibits favorable cycle characteristics. Furthermore, the non-aqueous electrolyte secondary battery has a high volume energy density. For use in a vehicle such as an electric vehicle, a hybrid electric vehicle, a fuel cell vehicle, or a hybrid fuel cell vehicle, a long lifespan is required as well as a high capacity and a large size as compared with use in an electric and mobile electronic device. Therefore, the lithium ion secondary battery (non-aqueous electrolyte secondary battery) can be suitably used as a power source for a vehicle, for example, as a power source or auxiliary power source for driving a vehicle.

Specifically, the battery or the assembled battery formed by combining plural batteries can be mounted on a vehicle. In the present invention, a battery exhibiting excellent long term reliability, output characteristics, and a long lifespan can be formed, and thus, by mounting such a battery, a plug-in hybrid electric vehicle having a long EV driving distance and an electric vehicle having a long driving distance per one charge can be constituted. This is because a vehicle having a long lifespan and high reliability can be provided as the battery or the assembled battery formed by combining plural batteries is used in, for example, a vehicle such as a hybrid car, a fuel cell vehicle, or an electric vehicle (including a two-wheel vehicle (motor bike) or a three-wheel vehicle in addition to all four-wheel vehicles (a passenger vehicle, a truck, a commercial vehicle such as a bus, a compact car, or the like)). However, the use is not limited to a vehicle, and the battery can be applied to various kinds of power sources of other vehicles, for example, a moving object such as an electric train, and it can also be utilized as a built-in power source of an uninterruptable power source unit.

Examples

Hereinafter, the present invention will be described in more detail using Examples and Comparative Examples, but the present invention is not limited only to the following Examples in any way.

1. Fabrication of Positive Electrode

A positive electrode active material slurry was prepared by mixing 94% by mass of NMC composite oxide as the positive electrode active material, 3% by mass of acetylene black as the conductive aid, 3% by mass of polyvinylidene fluoride (PVdF) as the binder, and an appropriate amount of N-methyl-2-pyrrolidone (NMP) as a slurry viscosity adjusting solvent. The obtained positive electrode active material slurry was applied to the surface of an aluminum foil (thickness: 20 $\mu$m) as the positive electrode current collector, dried for 3 minutes at 120°C, and subjected to compression molding using a roll press machine, thereby fabricating a positive electrode active material layer having a planar shape of a rectangle. The positive electrode active material layer was also formed on the back surface of the aluminum foil in the same manner, thereby fabricating a positive electrode having a positive electrode active material layer formed on both surfaces of a positive electrode current collector (aluminum foil). Incidentally, the coating amount of the positive electrode active material layer on one surface was 24 mg/cm$^2$ (not including foil) . Further, the density thereof was 3.5 g/cm$^3$ (not including foil).

KUREHA KF Polymer, powder type, Grade No. W#7200 manufactured by Kureha Battery Materials Japan Co., Ltd. was used as the PVdF. Further, an NMC composite oxide having a composition represented by LiNi$_{0.5}$Mn$_{0.3}$Co$_{0.2}$O$_2$ (average particle diameter: 15 $\mu$m) was used as the NMC composite oxide. An NMC composite oxide in which, applying this to the General Formula (1) : Li$_a$Ni$_b$Mn$_c$CO$_d$M$_x$O$_2$, a = 1, b = 0.5, c = 0.3, d = 0.2, x = 0, and b + c + d = 1 are satisfied, and which satisfies the requirement of the General Formula (1) was used. This NMC composite oxide was prepared by the following preparation method.

(Preparation of NMC Composite Oxide)

To an aqueous solution (1 mol/L) having nickel sulfate, cobalt sulfate, and manganese sulfate dissolved therein, sodium hydroxide and ammonia were continuously supplied at 60°C to adjust the pH to 11.3, and according to a co-precipitation method, metal composite hydroxide in which nickel, manganese, and cobalt are dissolved at a molar ratio of 50 : 30 : 20 was produced.

The metal composite hydroxide and lithium carbonate were weighed such that the ratio of the total mole number of metals (Ni, Mn, and Co) other than Li to the mole number of Li was 1 : 1, and then sufficiently mixed. The temperature was increased at a temperature increase rate of 5°C/min, temporary calcination was performed at 900°C for 2 hours in air atmosphere, the temperature was then increased at a temperature increase rate of 3°C/min, and main calcination was performed at 920°C for 10 hours. After cooling to room temperature, an NMC composite oxide as a positive electrode active material having a composition of $LiNi_{0.5}Mn_{0.3}Co_{0.2}O_2$ was obtained. Incidentally, the average secondary particle diameter of the obtained NMC composite oxide was 10 $\mu$m.

2. Fabrication of Negative Electrode

2.1. Fabrication of Negative Electrodes of Comparative Examples 1-1 to 1-4

(Fabrication of Negative Electrodes of Comparative Example 1-1 and Comparative Example 1-3)

96% by mass of natural graphite as the negative electrode active material, 1% by mass of carbon black as the conductive aid (Super-P, manufactured by TIMCAL Ltd.), 1% by mass of sodium salt of carboxymethyl cellulose as a thickener, and 2% by mass of latex of styrene-butadiene rubber (SBR) as the binder were dispersed in purified water to prepare a negative electrode active material slurry.

Specifically, first, a solution obtained by dissolving the sodium salt of carboxymethyl cellulose as the thickener in a solvent (ion-exchanged water) to have a concentration of 1% by mass with respect to 100% by mass of the total mass of the negative electrode active material, the conductive aid, the binder, and the thickener was prepared. The conductive aid and the negative electrode active material powder were added to 1/3 of the amount of the solution and were stirred using a stirring and defoaming apparatus for 3 minutes at 2000 rpm. Addition with an aqueous solution of the thickener to the mixture and stirring were repeated three times with a resting period of 30 seconds sandwiched therebetween. Then, latex of SBR as the binder was added thereto and further stirred using the stirring and defoaming apparatus for 1 minutes at 2000 rpm, thereby obtaining a negative electrode active material slurry.

The negative electrode active material slurry was applied to a copper foil (thickness: 10 $\mu$m) as the negative electrode current collector, dried for 3 minutes at 120°C, and subjected to compression molding using a roll press machine, thereby fabricating a negative electrode. The negative electrode active material layer was also formed on the back surface of the copper foil in the same manner, thereby fabricating a negative electrode having a negative electrode active material layer with a thickness of 84 $\mu$m respectively formed on both surfaces of the negative electrode current collector (copper foil) . The coating amount of the negative electrode active material layer on one surface was 12.7 mg/cm$^2$ (not including foil) . Further, the density of the negative electrode active material layer constituting the negative electrode of each of Comparative Example 1-1 and Comparative Example 1-3 was 1.5 g/cm$^3$ (not including foil).

(Fabrication of Negative Electrodes of Comparative Example 1-2 and Comparative Example 1-4)

In the Comparative Example 1-1, when a negative electrode active material slurry was prepared, the conductive aid and the negative electrode active material powder were added to a solution obtained by dissolving the sodium salt of carboxymethyl cellulose as the thickener in a solvent (ion-exchanged water) to have a concentration of 1% by mass with respect to 100% by mass of the total mass of the negative electrode active material, the conductive aid, the binder, and the thickener, and then they were stirred using a stirring and defoaming apparatus for 3 minutes at 2000 rpm, and latex of styrene-butadiene rubber (SBR) as the binder was then added thereto and they were stirred using the stirring and defoaming apparatus for 1 minute at 2000 rpm, thereby obtaining a negative electrode active material slurry. Negative electrodes of Comparative Example 1-2 and Comparative Example 1-4 were fabricated by setting other conditions to be the same as in the Comparative Example 1-1. The coating amount of the negative electrode active material layer on one surface was 12.7 mg/cm$^2$ (not including foil). Further, the density of the negative electrode active material layer constituting the negative electrodes of Comparative Example 1-2 and Comparative Example 1-4 was 1.5 g/cm$^3$ (not including foil).

2.2. Fabrication of Negative Electrodes of Comparative Examples 2-1 to 2-8 and Examples 2-1 to 2-6

(Fabrication of Negative Electrodes of Comparative Example 2-1 and Example 2-1)

As the Si material, a Si-Ti alloy represented by $Si_{90}Ti_{10}$ (unit: % by mass) was used. Incidentally, the Si-Ti alloy was produced by a mechanical alloying method. Specifically, by using a planetary ball mill apparatus P-6 manufactured by Fritsch GmbH, zirconia pulverizing balls and raw material powders of the alloy were put in a zirconia pulverizing pot and alloyed at 600 rpm for 48 hours. Thereafter, a pulverization treatment was performed at 400 rpm for 1 hour. As the raw material powders of the alloy, metal powders of Si and Ti were used. Herein, the alloying treatment is to perform alloying by applying high energy to the raw material powders of the alloy at high rotation (600 rpm). Meanwhile, the pulverization treatment is to perform a treatment of loosening secondary particles at low rotation (400 rpm) (in this treatment, alloying does not occur).

D50 (A) of the secondary particle diameter of the obtained Si-Ti alloy was 6 $\mu$m, and D90 (D) of the secondary particle diameter was 10 $\mu$m.

94.08% by mass of natural graphite (D50 (C) of the secondary particle diameter: 25 $\mu$m) and 1.92% by mass of the Si-Ti alloy prepared above as the negative electrode active material, 1% by mass of carbon black (Super-P, manufactured by TIMCAL Ltd.) as the conductive aid, 1% by mass of sodium salt of carboxymethyl cellulose, and 2% by mass of latex of SBR were dispersed in purified water, thereby preparing a negative electrode active material slurry.

Specifically, first, a solution obtained by dissolving the sodium salt of carboxymethyl cellulose as the thickener in a solvent (ion-exchanged water) to have a concentration of 1% by mass with respect to 100% by mass of the total mass of the negative electrode active material, the conductive aid, the thickener, and the binder was prepared. The conductive aid and the negative electrode active material powder were added to 1/3 of the amount of the solution and were stirred using a stirring and defoaming apparatus for 3 minutes at 2000 rpm. Addition with an aqueous solution of the thickener to the mixture and stirring were repeated three times with a resting period of 30 seconds sandwiched therebetween. Then, latex of SBR as the binder was added thereto and further stirred using the stirring and defoaming apparatus for 1 minute at 2000 rpm, thereby obtaining a negative electrode active material slurry.

The negative electrode active material slurry was applied to a copper foil (thickness: 10 $\mu$m) as the negative electrode current collector, dried for 3 minutes at 120°C, and subjected to compression molding using a roll press machine, thereby fabricating a negative electrode. The negative electrode active material layer was also formed on the back surface of the copper foil in the same manner, thereby fabricating a negative electrode having a negative electrode active material layer with a thickness of 66 $\mu$m respectively formed on both surfaces of the negative electrode current collector (copper foil) . The coating amount of the negative electrode active material layer on one surface was 11.96 mg/cm$^2$ (not including foil). The density of the negative electrode active material layer was 1.81 g/cm$^3$ (not including foil).

Applying the composition of the negative electrode active material layer to Formula (1), $\alpha + \beta = 96$, $\alpha = 1.92$, and $\beta = 94.08$ are satisfied, and the requirement of Formula (1) is satisfied.

Further, the ratio A/C of D50 (A) of the Si material to D50 (C) of the carbon material was 6 $\mu$m/25 $\mu$m = 0.24. Further, the ratio B/D of D90 (B) of the Si material to the thickness (D) of the negative electrode active material layer was 10 $\mu$m/66 $\mu$m = 0.15.

(Fabrication of Negative Electrodes of Comparative Example 2-2 and Example 2-2)

In the fabrication of the negative electrodes of the Comparative Example 2-1 and the Example 2-1, when a negative electrode active material slurry was prepared, the conductive aid and the negative electrode active material powder were added to a solution obtained by dissolving the sodium salt of carboxymethyl cellulose as the thickener in a solvent (ion-exchanged water) to have a concentration of 1% by mass with respect to 100% by mass of the total mass of the negative electrode active material, the conductive aid, the thickener, and the binder, and then they were stirred using a stirring and defoaming apparatus for 3 minutes at 2000 rpm, and latex of SBR as the binder was then added thereto to have a concentration of 2% by mass with respect to 100% by mass of the total mass of the negative electrode active material, the conductive aid, the thickener, and the binder, and then they were stirred using the stirring and defoaming apparatus for 1 minute at 2000 rpm, thereby obtaining a negative electrode active material slurry. A negative electrode was fabricated in the same manner except the above conditions. The coating amount of the negative electrode active material layer on one surface was 11.96 mg/cm$^2$ (not including foil). The density of the negative electrode active material layer was 1.81 g/cm$^3$ (not including foil).

(Fabrication of Negative Electrodes of Comparative Example 2-3 and Comparative Example 2-6)

In the fabrication of the negative electrodes of the Comparative Example 2-1 and the Example 2-1, when a negative electrode active material slurry is prepared, the conductive aid and the negative electrode active material powder were added to a solution obtained by dissolving the sodium salt of carboxymethyl cellulose as the thickener in a solvent (ion-exchanged water) to have a concentration of 1% by mass with respect to 100% by mass of the total mass of the negative electrode active material, the conductive aid, the thickener, and the binder, and then they were stirred using a stirring and defoaming apparatus for 1 minute at 2000 rpm, and latex of SBR as the binder was then added thereto to have a concentration of 2% by mass with respect to 100% by mass of the total mass of the negative electrode active material, the conductive aid, the thickener, and the binder, and then they were stirred using the stirring and defoaming apparatus for 30 seconds at 2000 rpm, thereby obtaining a negative electrode active material slurry. A negative electrode was fabricated in the same manner except the above conditions. The coating amount of the negative electrode active material layer on one surface was 11.96 mg/cm$^2$ (not including foil). The density of the negative electrode active material layer was 1.81 g/cm$^3$ (not including foil).

(Fabrication of Negative Electrodes of Comparative Example 2-4 and Comparative Example 2-7)

In the fabrication of the negative electrodes of the Comparative Example 2-1 and the Example 2-1, when a Si-Ti alloy as the Si material was produced, by using a planetary ball mill apparatus P-6 manufactured by Fritsch GmbH, zirconia pulverizing balls and raw material powders of the alloy were put in a zirconia pulverizing pot and alloyed at 600 rpm for 48 hours. Thereafter, a pulverization treatment was performed at 200 rpm for 1 hour.

The obtained Si-Ti alloy had the same composition of the Si-Ti alloy of the Comparative Example 2-1, D50 (A) of the secondary particle diameter was 15 $\mu$m, and D90 (D) of the secondary particle diameter was 50 $\mu$m.

94.08% by mass of natural graphite (D50 (C) of the secondary particle diameter: 25 $\mu$m) and 1.92% by mass of the Si-Ti alloy prepared above as the negative electrode active material, 1% by mass of carbon black (Super-P, manufactured by TIMCAL Ltd.) as the conductive aid, 1% by mass of sodium salt of carboxymethyl cellulose as the thickener, and 2% by mass of latex of SBR as the binder were dispersed in purified water, thereby preparing a negative electrode active material slurry.

Specifically, first, a solution obtained by dissolving the sodium salt of carboxymethyl cellulose as the thickener in a solvent (ion-exchanged water) to have a concentration of 1% by mass with respect to 100% by mass of the total mass of the negative electrode active material, the conductive aid, the thickener, and the binder was prepared. The conductive aid and the negative electrode active material powder were added to 1/3 of the amount of the solution and were stirred using a stirring and defoaming apparatus for 3 minutes at 2000 rpm. Addition with an aqueous solution of the thickener to the mixture and stirring were repeated three times with a resting period of 30 seconds sandwiched therebetween. Then, latex of SBR as the binder was added thereto and was stirred using the stirring and defoaming apparatus for 1 minute at 2000 rpm, thereby obtaining a negative electrode active material slurry. A negative electrode was fabricated in the same manner except the above conditions. The coating amount of the negative electrode active material layer on one surface was 11.96 mg/cm$^2$ (not including foil). The density of the negative electrode active material layer was 1.81 g/cm$^3$ (not including foil).

The ratio A/C of D50 (A) of the Si material to D50 (C) of the carbon material was 15 $\mu$m/25 $\mu$m = 0.60. Further, the ratio B/D of D90 (B) of the Si material to the thickness (D) of the negative electrode active material layer was 50 $\mu$m/66 $\mu$m = 0.75.

(Fabrication of Negative Electrode of Comparative Example 2-5)

In the fabrication of the negative electrode of the Comparative Example 2-4, when a negative electrode active material slurry was prepared, the conductive aid and the negative electrode active material powder were added to a solution obtained by dissolving the sodium salt of carboxymethyl cellulose in a solvent (ion-exchanged water) to have a concentration of 1% by mass with respect to 100% by mass of the total mass of the negative electrode active material, the conductive aid, the thickener, and the binder, and then they were stirred using a stirring and defoaming apparatus for 3 minutes at 2000 rpm, and latex of SBR was then added thereto to have a concentration of 2% by mass with respect to 100% by mass of the total mass of the negative electrode active material, the conductive aid, the thickener, and the binder, and then they were stirred using the stirring and defoaming apparatus for 1 minute at 2000 rpm, thereby obtaining a negative electrode active material slurry. A negative electrode was fabricated in the same manner except the above conditions.

(Fabrication of Negative Electrode of Comparative Example 2-8)

In the fabrication of the negative electrodes of the Comparative Example 2-1 and the Example 2-1, when a Si-Ti alloy was produced, by using a planetary ball mill apparatus P-6 manufactured by Fritsch GmbH, zirconia pulverizing balls and raw material powders of the alloy were put in a zirconia pulverizing pot and alloyed at 600 rpm for 48 hours. Thereafter, a pulverization treatment was performed at 400 rpm for 0.5 hour.

The obtained Si-Ti alloy had the same composition of the Si-Ti alloy of the Comparative Example 2-1, D50 (A) of the secondary particle diameter was 9 $\mu$m, and D90 (D) of the secondary particle diameter was 45 $\mu$m.

94.08% by mass of natural graphite (D50 (C) of the secondary particle diameter: 25 $\mu$m) and 1.92% by mass of the Si-Ti alloy prepared above as the negative electrode active material, 1% by mass of carbon black (Super-P, manufactured by TIMCAL Ltd.) as the conductive aid, 1% by mass of sodium salt of carboxymethyl cellulose as the thickener, and 2% by mass of latex of SBR as the binder were dispersed in purified water, thereby preparing a negative electrode active material slurry.

Specifically, first, a solution obtained by dissolving the sodium salt of carboxymethyl cellulose in ion-exchanged water to have a concentration of 1% by mass with respect to 100% by mass of the total mass of the negative electrode active material, the conductive aid, the thickener, and the binder was prepared. The conductive aid and the negative electrode active material powder were added to 1/3 of the amount of the solution and were stirred using a stirring and defoaming apparatus for 3 minutes at 2000 rpm. Addition with an aqueous solution of the thickener to the mixture and stirring were repeated three times with a resting period of 30 seconds sandwiched therebetween. Then, latex of SBR was added thereto and was stirred using the stirring and defoaming apparatus for 1 minute at 2000 rpm, thereby obtaining a negative electrode active material slurry. A negative electrode was fabricated in the same manner except the above conditions. The coating amount of the negative electrode active material layer on one surface was 11.96 mg/cm$^2$ (not including foil). The density of the negative electrode active material layer was 1.81 g/cm$^3$ (not including foil).

The ratio A/C of D50 (A) of the Si material to D50 (C) of the carbon material was 9 $\mu$m/25 $\mu$m = 0.36. Further, the ratio B/D of D90 (B) of the Si material to the thickness (D) of the negative electrode active material layer was 45 $\mu$m/66 $\mu$m = 0.68.

(Fabrication of Negative Electrode of Example 2-3)

In the fabrication of the negative electrodes of the Comparative Example 2-1 and the Example 2-1, when a Si-Ti alloy was produced, by using a planetary ball mill apparatus P-6 manufactured by Fritsch GmbH, zirconia pulverizing balls and raw material powders of the alloy were put in a zirconia pulverizing pot and alloyed at 600 rpm for 48 hours. Thereafter, a pulverization treatment was performed at 400 rpm for 4 hours.

The obtained Si-Ti alloy had the same composition of the Si-Ti alloy of the Comparative Example 2-1 and the Example 2-1, D50 (A) of the secondary particle diameter was 6 $\mu$m, and D90 (D) of the secondary particle diameter was 8.6 $\mu$m.

A negative electrode was fabricated in the same manner as in the Comparative Example 2-1 and the Example 2-1, except that the Si-Ti alloy prepared above was used as the Si material. The coating amount of the negative electrode active material layer on one surface was 11.96 mg/cm$^2$ (not including foil). The density of the negative electrode active material layer was 1.81 g/cm$^3$ (not including foil) .

The ratio A/C of D50 (A) of the Si material to D50 (C) of the carbon material was 6 $\mu$m/25 $\mu$m = 0.24. Further, the ratio B/D of D90 (B) of the Si material to the thickness (D) of the negative electrode active material layer was 8.6 $\mu$m/66 $\mu$m = 0.13.

(Fabrication of Negative Electrode of Example 2-4)

In the fabrication of the negative electrode of the Example 2-3, when a negative electrode active material slurry was prepared, the conductive aid and the negative electrode active material powder were added to a solution obtained by dissolving the sodium salt of carboxymethyl cellulose in ion-exchanged water to have a concentration of 1% by mass with respect to 100% by mass of the total mass of the negative electrode active material, the conductive aid, the thickener, and the binder, and then they were stirred using a stirring and defoaming apparatus for 3 minutes at 2000 rpm, and latex of SBR was then added thereto to have a concentration of 2% by mass with respect to 100% by mass of the total mass of the negative electrode active material, the conductive aid, the thickener, and the binder, and then they were stirred using the stirring and defoaming apparatus for 1 minute at 2000 rpm, thereby obtaining a negative electrode active material slurry. A negative electrode was fabricated in the same manner except the above conditions.

(Fabrication of Negative Electrode of Example 2-5)

In the fabrication of the negative electrodes of the Comparative Example 2-1 and the Example 2-1, when a Si-Ti alloy was produced, by using a planetary ball mill apparatus P-6 manufactured by Fritsch GmbH, zirconia pulverizing balls and raw material powders of the alloy were put in a zirconia pulverizing pot and alloyed at 600 rpm for 48 hours. Thereafter, a pulverization treatment was performed at 400 rpm for 3 hours.

The obtained Si-Ti alloy had the same composition of the Si-Ti alloy of the Comparative Example 2-1 and the Example 2-1, D50 (A) of the secondary particle diameter was 4.3 $\mu$m, and D90 (D) of the secondary particle diameter

was 10 μm.

A negative electrode was fabricated in the same manner as in the Comparative Example 2-1 and the Example 2-1, except that the Si-Ti alloy prepared above was used as the Si material. The coating amount of the negative electrode active material layer on one surface was 11.96 mg/cm$^2$ (not including foil). The density of the negative electrode active material layer was 1.81 g/cm$^3$ (not including foil) .

The ratio A/C of D50 (A) of the Si material to D50 (C) of the carbon material was 4.3 μm/25 μm = 0.17. Further, the ratio B/D of D90 (B) of the Si material to the thickness (D) of the negative electrode active material layer was 10 μm/66 μm = 0.15.

(Fabrication of Negative Electrode of Example 2-6)

In the fabrication of the negative electrode of the Example 2-5, when a negative electrode active material slurry was prepared, the conductive aid and the negative electrode active material powder were added to a solution obtained by dissolving the sodium salt of carboxymethyl cellulose in ion-exchanged water to have a concentration of 1% by mass with respect to 100% by mass of the total mass of the negative electrode active material, the conductive aid, the thickener, and the binder, and then they were stirred using a stirring and defoaming apparatus for 3 minutes at 2000 rpm, and latex of SBR was then added thereto to have a concentration of 2% by mass with respect to 100% by mass of the total mass of the negative electrode active material, the conductive aid, the thickener, and the binder, and then they were stirred using the stirring and defoaming apparatus for 1 minute at 2000 rpm, thereby obtaining a negative electrode active material slurry. A negative electrode was fabricated in the same manner except the above conditions. The coating amount of the negative electrode active material layer on one surface was 11.96 mg/cm$^2$ (not including foil). The density of the negative electrode active material layer was 1.81 g/cm$^3$ (not including foil).

2.3. Fabrication of Negative Electrodes of Comparative Examples 3-1 to 3-8 and Examples 3-1 to 3-6

Negative electrodes were fabricated in the same manner as in the Comparative Examples 2-1 to 2-8 and the Examples 2-1 to 2-3, except that the composition ratio of the negative electrode active material, the conductive aid, and the binder in the negative electrode active material was set to 86.4% by mass of natural graphite, 9.6% by mass of Si-Ti alloy, 1% by mass of carbon black as the conductive aid (Super-P, manufactured by TIMCAL Ltd.), 1% by mass of sodium salt of carboxymethyl cellulose as the thickener, and 2% by mass of latex of SBR as the binder.

The coating amounts of the negative electrode active material layer on one surface were all 10.2 mg/cm$^2$ (not including foil) . The densities of the negative electrode active material layer were all 1.7 g/cm$^3$ (not including foil).

Applying the composition of the negative electrode active material layer to Formula (1), $\alpha + \beta = 96$, $\alpha = 9.6$, and $\beta = 86.4$ are satisfied, and the requirement of Formula (1) is satisfied.

3. Fabrication of Battery

3.1. Small-Sized Battery (Comparative Examples 1-1 and 1-2, Comparative Examples 2-1 to 2-5 and 2-8, and Comparative Examples 3-1 to 3-5 and 3-8)

The positive electrode obtained in the above section 1 and the negative electrode obtained in the above section 2 were cut to have an active material layer area (length 2.5 cm × width 2.0 cm) and laminated through a porous polypropylene separator (thickness: 25 μm, porosity: 55%) (one sheet of the positive electrode and two sheets of the negative electrode), thereby fabricating a power generating element. The positive electrode lead and the negative electrode lead were joined to respective current collectors of the obtained power generating element, respectively, and the positive electrode lead or the negative electrode lead was joined to the positive electrode current collecting plate or the negative electrode current collecting plate. Thereafter, the power generating element was introduced into an aluminum laminate sheet bag as the battery outer casing body (length 3.7 cm × width 3.2 cm) such that the positive electrode current collecting plate and the negative electrode current collecting plate were exposed to the outside of the battery, the electrolyte solution was injected from an opening portion by an injecting machine. The aluminum laminate sheet bag is the one obtained by overlapping two aluminum laminate sheets (film sheets obtained by sandwiching aluminum by PP films), sealing three sides of four sides of the outer peripheral (outer edge) by thermocompression bonding, and unsealing the remaining one side (opening portion). As the electrolyte solution, one obtained by adding 1% by mass of vinylene carbonate as an additive with respect to 100% by mass of a solution obtained by dissolving 1.0 M LiPF$_6$ in a mixed solvent of ethylene carbonate (EC) and diethyl carbonate (DEC) (volume ratio of EC : DEC = 3 : 7) was used. Herein, the amount of the electrolyte solution injected was set to an amount 1.50 times with respect to the total pore volume (obtained by calculation) of the positive electrode active material layer, the negative electrode active material layer, and the separator. Then, under vacuum condition, the opening portion of the aluminum laminate sheet bag was sealed by thermocompression bonding such that the positive electrode current collecting plate and the negative electrode current collector connected to both the electrodes (current collectors) through the leads were exposed, and then a testing cell as a laminate type lithium ion secondary battery was completed.

3.2. Fabrication of Large-Sized Battery (Comparative Examples 1-3 and 1-4, Comparative Examples 2-6, 2-7, and 2-8, Examples 2-1 to 2-6, Comparative Examples 3-6, 3-7, and 3-8, and Examples 3-1 to 3-6)

The positive electrode obtained in the above section 1 and the negative electrode obtained in the above section 2 were cut to have an active material layer area (length 25 cm × width 15 cm) and laminated through a porous polypropylene separator (thickness: 25 μm, porosity: 55%) (10 sheets of the positive electrode and 11 sheets of the negative electrode), thereby fabricating a power generating element. The positive electrode lead and the negative electrode lead were joined to respective current collectors of the obtained power generating element, respectively, and the positive electrode lead or the negative electrode lead was joined to the positive electrode current collecting plate or the negative electrode current collecting plate. Thereafter, the power generating element was introduced into an aluminum laminate sheet bag as the battery outer casing body (length 27.4 cm × width 17.4 cm) such that the positive electrode current collecting plate and the negative electrode current collecting plate were exposed to the outside of the battery, the electrolyte solution was injected. The aluminum laminate sheet bag is the one obtained by sandwiching two aluminum laminate sheets (film sheets obtained by laminating aluminum on a PP film), sealing three sides of four sides of the outer peripheral (outer edge) by thermocompression bonding, and unsealing the remaining one side (opening portion). As the electrolyte solution, one obtained by adding 1% by mass of vinylene carbonate as an additive with respect to 100% by mass of a solution obtained by dissolving 1.0 M LiPF$_6$ in a mixed solvent of ethylene carbonate (EC) and diethyl carbonate (DEC) (volume ratio of EC : DEC = 3 : 7) was used. Herein, the amount of the electrolyte solution injected was set to an amount 1.50 times with respect to the total pore volume (obtained by calculation) of the positive electrode active material layer, the negative electrode active material layer, and the separator. Then, under vacuum condition, the opening portion of the aluminum laminate sheet bag was sealed by thermocompression bonding such that the positive electrode current collecting plate and the negative electrode current collector connected to both the electrodes (current collectors) through the leads were exposed, and then a testing cell as a laminate type lithium ion secondary battery was completed.

4. Evaluation of Negative Electrode

4.1. Estimation of Variation in Area Proportion of Si Material and Carbon Material in Plane of Negative Electrode Active Material Layer

Regarding the variation in area proportion of the Si material and the carbon material in a plane of the negative electrode active material layer, an area proportion S (%) of the Si material with respect to the total area of the area of the carbon material and the area of the Si material in an area of the field of view of each image (five sites) of cross-sections of the negative electrode active material layer in a case where a plurality of arbitrary places in a plane of the negative electrode active material layer (herein, five sites in a place illustrated in Fig. 3) is selected was obtained, and then a difference between the maximum value and the minimum value with respect to an average value of S (%) was calculated.

Herein, places obtained by equally dividing a diagonal line (dashed-dotted line) in a plane of the negative electrode active material layer into six illustrated in Fig. 3(a) (places marked with number symbols 1 to 5 in the Fig. 3 (a)) were selected, and the negative electrode was subjected to cross-section processing by an arbitrary cross-section processing method along the diagonal line (dashed-dotted line) in a plane of the negative electrode active material layer illustrated in the Fig. 3(a) (cross-section is illustrated in the Fig. 3(b)). Next, according to a method described later, the area proportion S (%) of the Si material with respect to the carbon material in each image in the area of the field of view of each image of cross-sections of the cut negative electrode active material layer was calculated, and a difference between the maximum value and the minimum value of the area proportion S (%) of the Si material with respect to the total area of the area S (%) of the Si material and the area (100 - S) (%) of the carbon material in each image of these five sites was obtained. In the following Tables 2 and 3, or the like, the difference between the maximum value and the minimum value with respect to the average value of the area proportion S (%) of the Si material with respect to the total area of the area of the carbon material and the area of the Si material in each image of these five sites is also simply referred to as "variation (%) in dispersibility of the Si material and the carbon material."

As for "each image of cross-sections of the negative electrode active material layer" described above, reflection electron images obtained by observing, with an electron microscope, five sites marked with number symbols 1 to 5 in Fig. 3(b) corresponding to places of number symbols 1 to 5 in Fig. 3 (a) and the vicinities thereof (shaded portions in the drawing) were used. Further, the "area of the field of view in each image of cross-sections of the negative electrode active material layer" refers to a whole area (whole field of view) of secondary electron images or reflection electron images obtained by observing, with an electron microscope, five sites illustrated in Fig. 3 (b) and vicinities thereof (shaded portions in the drawing) (an area of a rectangular in which the vertical side is the thickness of the negative electrode active material layer and the horizontal side is 100 $\mu$m).

Regarding the area proportion (%) of the Si material with respect to the carbon material in each image of cross-sections of the negative electrode active material layer, a secondary electron image or a reflection electron image observed with an electron microscope was captured, the measurement image was gray-scaled, and an intermediate value between grayscale values of a part corresponding to the carbon material and a Si-based material part was set as an appropriate threshold value between the parts. Thus, the area of the carbon material and the area of the Si material were obtained, and then the area proportion thereof was calculated.

4.2. Estimation of Variation in Coating Amount per Unit Area in Plane of Negative Electrode Active Material Layer

Evaluation of the variation in coating amount at a plurality of selected sites in a planed of the negative electrode active material layer of the negative electrode fabricated above was performed by the following method.

Regarding the negative electrode coated with the negative electrode active material layer and then dried, the negative electrode in a size of length 25 cm $\times$ width 15 cm was cut to have a size of $\phi$15 at 10 sites, the weights thereof were measured, and then the coating amount per unit area was obtained. A maximum coating amount and a minimum coating amount of the measured coating amount per unit area at 10 sites were obtained, and a ratio of a larger value of absolute values of a difference between these values and a negative electrode designed coating amount set to be 1.2 times the capacity ratio with respect to the positive electrode to the negative electrode designed coating amount was designated as variation.

Variation (%) in coating amount per unit area in a plane of the negative electrode active material layer = [Larger value of an absolute value of a difference between the maximum coating amount and the negative electrode designed coating amount or an absolute values between the minimum coating amount and the negative electrode designed coating amount (mg/cm$^2$)]/[Negative electrode designed coating amount (mg/cm$^2$)] $\times$ 100

4.3. Estimation of Variation in Negative Electrode Capacity per Unit Area in Plane of Negative Electrode Active Material Layer

Evaluation of the variation in capacity at a plurality of selected sites in a plane of the negative electrode active material layer of the negative electrode fabricated above was performed by the following method.

A negative electrode cut into a diameter of 15 mm, a glass filter having a diameter of 16 mm and a thickness of 150 $\mu$m, and a lithium metal foil having a diameter of 15 mm and a thickness of 0.2 mm were placed on a CR2032 coin cell, and an electrolyte solution, which is obtained by adding 1% by mass of vinylene carbonate as an additive with respect to 100% by mass of a solution obtained by dissolving 1.0 M LiPF$_6$ in a mixed solvent of ethylene carbonate (EC) and diethyl carbonate (DEC) (volume ratio of EC : DEC = 3 : 7), was added, thereby fabricating a single battery. A cycle in which the fabricated single battery was subjected to constant current constant voltage charging at a charge and discharge rate of 0.1 C and at a lower limit voltage of 10 mV and subjected to constant current discharging at an upper limit voltage of 1.5 V was regarded as one cycle, the discharge capacity at the second cycle was regarded as the negative electrode capacity, the negative electrode capacity per unit area obtained from a plurality of selected sites in a plane of the negative electrode active material layer was calculated, and variation thereof was evaluated.

$$\text{Variation (\%) in negative electrode capacity per unit area} =$$

$$((\text{Maximum value of negative electrode capacity per unit area (Ah/cm}^2)$$

$$- \text{ Minimum value of negative electrode capacity per unit area}$$

$$(\text{Ah/cm}^2))/(\text{Average value of negative electrode capacity per unit area}$$

$$(\text{Ah/cm}^2))$$

4.4. Secondary Particle Size Distribution of Si-Ti Alloy and Graphite

A D50 value and a D90 value were calculated on the basis of particle size distribution data measured by a laser particle size distribution analyzer:

D50 : a particle diameter in a case where cumulative distribution is 50% from the small particle diameter side; and
D90 : a particle diameter in a case where cumulative distribution is 90% from the small particle diameter side.

Further, as the laser particle size distribution analyzer, a laser diffraction/scattering particle size distribution analyzer (manufactured by HORIBA, Ltd., model: LA-920) was used.

4.5. Thickness of Negative Electrode Active Material Layer

As the thickness (D) of the negative electrode active material layer, an average value obtained by measuring the thicknesses at five sites using a contact-type thickness gauge was used.

5. Evaluation of Battery

5.1. Evaluation of Battery Characteristics

Each battery (testing cell) obtained above was set on an evaluated cell attachment jig and subjected to a charge and discharge test under the following condition to measure a rated capacity, and the cycle durability was evaluated.

5.2. Measurement of Rated Capacity

The rated capacity of the battery (testing cell) was obtained as follows.
An electrolyte solution was injected to a battery (testing cell), and then maintained for about 10 hours. Thereafter, the rated capacity was measured by the following procedures 1 to 5 at a temperature 25°C and in a voltage range of 3.0 V to 4.15 V.
Procedure 1: After the voltage reached 4.15 V at a constant current charge of 0.1 C, rested for 5 minutes.
Procedure 2: Following the procedure 1, charged for 1.5 hours at a constant voltage charge, and rested for 5 minutes.
Procedure 3: After the voltage reached 3.0 V by a constant current discharge of 0.1 C, discharged for 2 hours at a constant voltage discharge, and then rested for 10 seconds.
Procedure 4: After the voltage reached 4.1 V by a constant current charge of 0.1 C, charged for 2.5 hours at a constant voltage charge, and then rested for 10 seconds.
Procedure 5: After the voltage reached 3.0 V by a constant current discharge of 0.1 C, discharged for 2 hours at a constant voltage discharge, and then stopped for 10 seconds.
Rated capacity: Discharge capacity in discharge from constant current discharge to constant voltage discharge (CCCV discharge capacity) in the procedure 5 was regarded as the rated capacity. The obtained results are presented in the following Tables 1 to 3.

5.3. Measurement of Battery Volume

The battery (testing cell) volume was obtained from the product of the projected area and the thickness of the battery including the battery outer casing body. Of them, regarding the projected area of the battery including the battery outer casing body, six projected areas of the front surface, the rear surface, the right lateral surface, the left lateral surface, the planar surface, and the bottom surface of the battery are obtained, but it is sufficient to use the largest projected area of the battery of these projected areas. In the present Examples, the projected area of the bottom surface of the battery when the battery is placed on a flat plate in the most stable state was used. In addition, the thickness of the battery including the battery outer casing body was the thickness at the time of full charge, and in the present Examples, procedures up to the Procedure 4 were performed similarly to the section "5.2. Measurement of Rated Capacity" and the thickness of the battery (testing cell) after constant voltage charge of the Procedure 4 was measured. In addition, since the thickness of the battery including the battery outer casing body is a large area in the case of a large-sized battery, in consideration of a variation caused by measurement sites, in the present Examples, thicknesses of the battery including the battery outer casing body at nine sites of sites indicated by number symbols 1 to 9 illustrated in Fig. 2 or in the vicinity thereof were measured and a value obtained by averaging the thicknesses was used. The thickness of a small-sized battery was similarly measured. The obtained results are presented in the section "Cell volume" of the following Tables 1 to 3.

Further, the ratio value of the battery volume (the product of the projected area and the thickness of the battery including a battery outer casing body) to the rated capacity calculated from the measurement result of the rated capacity and the measurement result of the battery volume is presented in the section "Ratio of battery volume to rated capacity" of the following Tables 1 to 3.

5.4. Evaluation of Cycle Durability

In the evaluation of cycle durability, using each battery (testing cell) obtained in 3. Fabrication of Battery described above, 100 cycles of charge and discharge at a rate of 1 C were repeated at 25°C. In the evaluation of the battery, as a charge condition, a constant current constant voltage charging method was performed in which the maximum voltage became 4.2 V at a rate of 1 C and then was maintained for about 1 hour to 1.5 hours. Further, as a discharge condition, a constant current discharge method for discharging a battery until the minimum voltage became 3.0 V at a rate of 1 C was performed. Any test was performed under ordinary temperature and ordinary pressure (25°C, under atmospheric pressure). The ratio of the discharge capacity at the 100th cycle to the discharge capacity at the 1st cycle was regarded as "capacity retention rate (%)" and evaluated. The obtained results are presented in the section "Capacity retention rate (%)" of the following Tables 1 to 3.

Further, a relation between a variation (%) in coating amount in the negative electrode active material layer and a capacity retention rate (%) is presented in Fig. 4, and a relation between a variation (%) in dispersibility of the Si material and the carbon material and a capacity retention rate (%) is presented in Figs. 5 and 6. Of these, Fig. 4 is diagram in which Comparative Examples 1-1 to 1-4 of Table 1 having a mixing ratio of the Si material of 0% by mass were divided into small-sized batteries (Comparative Examples 1-1 and 1-3) and large-sized batteries (Comparative Examples 1-2 and 1-4) and then plotted. Fig. 5 is a diagram in which Comparative Examples 2-1 to 2-9 and Examples 2-1 to 2-6 of Table 2 having a mixing ratio of the Si material of 1.92% by mass were divided into small-sized batteries and large-sized batteries and then plotted. Fig. 6 is a diagram in which Comparative Examples 3-1 to 3-9 and Examples 3-1 to 3-6 of Table 3 having a mixing ratio of the Si material of 9.6% by mass were divided into small-sized batteries and large-sized batteries and then plotted.

[Mathematical Formula 4]

$$\text{Capacity retention rate (\%)} = \text{Discharge capacity at the 100th cycle} / \text{Discharge capacity at the 1st cycle} \times 100$$

[Table 1]

Table 1

| | Mixing ratio of Si material (% by mass) | Rated capacity (Ah) | Battery volume (cm³) | Battery volume/ rated capacity (cm³/Ah) | Variation coating amount (%) | Variation in capacity (%) | Capacity retention rate (%) |
|---|---|---|---|---|---|---|---|
| Comparative Example 1-1 | 0 | 0.028 | 0.72 | 25.6 | 2 | 2 | 99.0 |

(continued)

|  | Mixing ratio of Si material (% by mass) | Rated capacity (Ah) | Battery volume (cm$^3$) | Battery volume/ rated capacity (cm$^3$/Ah) | Variation coating amount (%) | Variation in capacity (%) | Capacity retention rate (%) |
|---|---|---|---|---|---|---|---|
| Comparative Example 1-2 | 0 | 0.028 | 0.72 | 25.6 | 5 | 5 | 98.0 |
| Comparative Example 1-3 | 0 | 21.09 | 159.81 | 7.58 | 2 | 2 | 99.0 |
| Comparative Example 1-4 | 0 | 21.09 | 159.81 | 7.58 | 5 | 5 | 98.0 |

[Table 2]

Table 2

|  | Mixing ratio α of Si material (% by mass) | Rated capacity (Ah) | Battery volume (cm³) | Battery volume/ rated capacity (cm³/Ah) | Variation in dispersibility of Si material and carbon material (%) | Variation in coating amount (%) | A/C | B/D | Capacity retention rate (%) |
|---|---|---|---|---|---|---|---|---|---|
| Comparative Example 2-1 | 1.92 | 0.028 | 0.72 | 25.6 | 2.2 | 2 | 0.24 | 0.15 | 98 |
| Comparative Example 2-2 | 1.92 | 0.028 | 0.72 | 25.6 | 4.1 | 5 | 0.24 | 0.15 | 95 |
| Comparative Example 2-3 | 1.92 | 0.028 | 0.72 | 25.6 | 6.5 | 7 | 0.24 | 0.15 | 93 |
| Comparative Example 2-4 | 1.92 | 0.028 | 0.72 | 25.6 | 6.7 | 8 | 0.60 | 0.75 | 67 |
| Comparative Example 2-5 | 1.92 | 0.028 | 0.72 | 25.6 | 7.8 | 10 | 0.60 | 0.75 | 61 |
| Comparative Example 2-6 | 1.92 | 21.09 | 159.81 | 7.58 | 6.5 | 7 | 0.24 | 0.15 | 70 |
| Comparative Example 2-7 | 1.92 | 21.09 | 159.81 | 7.58 | 6.7 | 8 | 0.60 | 0.75 | 34 |
| Comparative Example 2-8 | 1.92 | 0.028 | 0.72 | 25.6 | 4.1 | 5 | 0.36 | 0.68 | 95 |
| Example 2-1 | 1.92 | 21.09 | 159.81 | 7.58 | 2.2 | 2 | 0.24 | 0.15 | 97 |
| Example 2-2 | 1.92 | 21.09 | 159.81 | 7.58 | 4.1 | 5 | 0.24 | 0.15 | 94 |
| Example 2-3 | 1.92 | 21.09 | 159.81 | 7.58 | 2.2 | 2 | 0.24 | 0.13 | 98 |
| Example 2-4 | 1.92 | 21.09 | 159.81 | 7.58 | 4.1 | 5 | 0.24 | 0.13 | 94 |
| Example 2-5 | 1.92 | 21.09 | 159.81 | 7.58 | 2.2 | 2 | 0.17 | 0.15 | 98 |
| Example 2-6 | 1.92 | 21.09 | 159.81 | 7.58 | 4.1 | 5 | 0.17 | 0.15 | 95 |

[Table 3]

[Table 3]

Table 3

| | Mixing ratio $\alpha$ of Si material (% by mass) | Rated capacity (Ah) | Battery volume (cm$^3$) | Battery volume/ rated capacity (cm$^3$/Ah) | Variation in dispersibility of Si material and carbon material (%) | Variation in coating amount (%) | A/C | B/D | Capacity retention rate (%) |
|---|---|---|---|---|---|---|---|---|---|
| Comparative Example 3-1 | 9.6 | 0.028 | 0.72 | 25.6 | 2.2 | 2 | 0.24 | 0.18 | 92 |
| Comparative Example 3-2 | 9.6 | 0.028 | 0.72 | 25.6 | 4.1 | 5 | 0.24 | 0.18 | 92 |
| Comparative Example 3-3 | 9.6 | 0.028 | 0.72 | 25.6 | 6.5 | 7 | 0.24 | 0.18 | 90 |
| Comparative Example 3-4 | 9.6 | 0.028 | 0.72 | 25.6 | 6.7 | 8 | 0.60 | 0.89 | 42 |
| Comparative Example 3-5 | 9.6 | 0.028 | 0.72 | 25.6 | 7.8 | 10 | 0.60 | 0.89 | 15 |
| Comparative Example 3-6 | 9.6 | 21.09 | 159.81 | 7.58 | 6.5 | 7 | 0.24 | 0.18 | 30 |
| Comparative Example 3-7 | 9.6 | 21.09 | 159.81 | 7.58 | 6.7 | 8 | 0.60 | 0.89 | 35 |
| Comparative Example 3-8 | 9.6 | 0.028 | 0.72 | 25.6 | 4.1 | 5 | 0.36 | 0.80 | 91 |
| Example 3-1 | 9.6 | 21.09 | 159.81 | 7.58 | 2.2 | 2 | 0.24 | 0.18 | 91 |
| Example 3-2 | 9.6 | 21.09 | 159.81 | 7.58 | 4.1 | 5 | 0.24 | 0.18 | 90 |
| Example 3-3 | 9.6 | 21.09 | 159.81 | 7.58 | 2.2 | 2 | 0.24 | 0.15 | 92 |
| Example 3-4 | 9.6 | 21.09 | 159.81 | 7.58 | 4.1 | 5 | 0.24 | 0.15 | 91 |
| Example 3-5 | 9.6 | 21.09 | 159.81 | 7.58 | 2.2 | 2 | 0.17 | 0.15 | 93 |
| Example 3-6 | 9.6 | 21.09 | 159.81 | 7.58 | 4.1 | 5 | 0.17 | 0.15 | 91 |

As shown in Table 1 described above, in a case where the Si material was not contained as the negative electrode active material, even in the large-sized battery, the capacity retention rate of the battery was not dependent on the variation in coating amount per unit area of the negative electrode active material layer and the variation per unit area of the negative electrode active material layer.

As shown in Table 2, in the small-sized battery having a small electrode area, when the variation in area proportion of the Si material in the negative electrode active material layer was 6.5% or less, the battery exhibited a high capacity retention rate of 90% or more (Comparative Examples 2-1 to 2-3), but in a case where the electrode area was large, when the variation in area proportion of the Si material was more than 5%, a decrease in capacity retention rate was observed (Comparative Examples 2-6 and 2-7). On the other hand, by setting the variation in area proportion of the Si material in a range of 5% or less, a significant improvement in durability was confirmed (Examples 2-1 to 2-6). It is considered that in the large-sized battery having a large area electrode, by setting the variation in area proportion of the Si material to 5% or less, the phenomenon that non-uniformity of reactivity with Li ions is caused by the interelectrode distance between the positive electrode and the negative electrode being increased in a certain site and being decreased in a certain site is suppressed. As a result, the cycle durability of the battery was considered to be improved.

Further, it is found that, when A/C < 0.5 and B/D < 0.5 are satisfied, excellent cycle durability is maintained.

From the results of Table 3, also in a case where the mixing ratio of the Si material in the active material was 9.6% by mass, even in a large-sized battery having a large electrode area, by controlling the variation of the Si material and the carbon material to adjust the variation in area proportion of the Si material to 5% or less, a significant improvement in durability was confirmed.

Reference Signs List

| | |
|---|---|
| 10, 50 | Lithium ion secondary battery |
| 11 | Negative electrode current collector |
| 12 | Positive electrode current collector |
| 13 | Negative electrode active material layer |
| 15 | Positive electrode active material layer |
| 17 | Electrolyte layer (separator) |
| 19 | Single battery layer |
| 21, 57 | Power generating element |
| 25 | Negative electrode current collecting plate |
| 27 | Positive electrode current collecting plate |
| 29, 52 | Battery outer casing material |
| 58 | Positive electrode tab |
| 59 | Negative electrode tab |

**Claims**

1. A non-aqueous electrolyte secondary battery which has a ratio value of a battery volume (a product of a projected area of the battery including a battery outer casing body and a thickness of the battery) to a rated capacity of 10 cm$^3$/Ah or less and a rated capacity of 3 Ah or more, the battery comprising:

   a power generating element including

   a positive electrode comprising a positive electrode active material layer containing a positive electrode active material formed on a surface of a positive electrode current collector,
   a negative electrode comprising a negative electrode active material layer containing a negative electrode active material formed on a surface of a negative electrode current collector, and
   a separator, wherein

   the negative electrode active material layer comprises a negative electrode active material represented by the following Formula (1):
   [Mathematical Formula 1]

$$\alpha \text{ (Si material)} + \beta \text{ (carbon material)} \quad (1)$$

(in the formula, the Si material is a Si-containing alloy; the carbon material is one or two or more kinds selected from the group consisting of graphite, non-graphitizable carbon, and amorphous carbon; $\alpha$ and $\beta$ represent % by mass of each component in the negative electrode active material layer; and $80 \leq \alpha + \beta \leq 98$, $0.1 \leq \alpha \leq 40$, and $58 \leq \beta \leq 97.9$ are satisfied),

when area proportions (%) of the Si material and the carbon material in an area of a field of view of each image of cross-sections of the negative electrode active material layer in a case where a plurality of arbitrary places is selected in a plane of the negative electrode active material layer are designated as S (%) and (100 - S) (%), respectively, a difference between the maximum value and the minimum value of S is within 5%; and

wherein a variation in coating amount per unit area in the negative electrode active material layer at a plurality of selected sites in a case where a plurality of arbitrary places is selected in a plane of the negative electrode active material layer is within 5%.

2. The non-aqueous electrolyte secondary battery according to claim 1, wherein, when D50 of a secondary particle diameter of the Si material is designated as A ($\mu$m) and D50 of a secondary particle diameter of the carbon material is designated as C ($\mu$m), the following Equation 1 is satisfied:
[Mathematical Formula 2]

$$A/C < 0.5 \qquad \text{Equation 1;}$$

and wherein, when D90 of a secondary particle diameter of the Si material is designated as B ($\mu$m) and a thickness of the negative electrode active material layer is designated as D ($\mu$m), the following Equation 2 is satisfied:
[Mathematical Formula 3]

$$B/D < 0.5 \qquad \text{Equation 2.}$$

3. The non-aqueous electrolyte secondary battery according to any one of claims 1 or 2, wherein the positive electrode active material comprises
a lithium nickel-based composite oxide represented by the General Formula (1): $Li_aNi_bMn_cCo_dM_xO_2$ (provided that, a, b, c, d, and x satisfy $0.9 \leq a \leq 1.2$, $0 < b < 1$, $0 < c \leq 0.5$, $0 < d \leq 0.5$, $0 \leq x \leq 0.3$, and b + c + d = 1; and M represents at least one kind selected from the group consisting of Ti, Zr, Nb, W, P, Al, Mg, V, Ca, Sr, and Cr).

4. The non-aqueous electrolyte secondary battery according to any one of claims 1 to 3, wherein the positive electrode active material layer has a rectangular shape, and an aspect ratio of the electrode defined as a length/width ratio of the rectangular positive electrode active material layer is 1 to 3.

5. The non-aqueous electrolyte secondary battery according to any one of claims 1 to 4, wherein the separator is a separator in which a heat resistant insulating layer is laminated on a porous substrate.

6. The non-aqueous electrolyte secondary battery according to any one of claims 1 to 5, wherein the battery is a flat stack type laminate battery having a configuration in which the power generating element is sealed in a battery outer casing body formed of a laminate film containing aluminum.

**Patentansprüche**

1. Eine nichtwässrige Elektrolyt-Sekundärbatterie, die einen Verhältniswert eines Batterievolumens (ein Produkt einer projizierten Fläche der Batterie einschließlich eines Batteriegehäusekörpers und der Dicke der Batterie) zu einer Nennkapazität von 10 cm$^3$/Ah oder weniger und eine Nennkapazität von 3 Ah oder mehr aufweist, wobei die Batterie umfasst:

ein Stromerzeugungselement einschließlich:

einer positiven Elektrode, umfassend eine Positivelektroden-Aktivmaterialschicht, die ein Positivelektroden-Aktivmaterial enthält, welches auf einer Oberfläche eines Positivelektroden-Stromkollektors ausgebildet ist;
einer negativen Elektrode, umfassend eine Negativelektroden-Aktivmaterialschicht, die ein Negativelektroden-Aktivmaterial enthält, welches auf einer Oberfläche eines Negativelektroden-Stromkollektors ausgebildet ist, und
einem Separator, worin

die Schicht des Negativelektroden-Aktivmaterials ein Negativelektroden-Aktivmaterial umfasst, welches durch die folgende Formel (1) dargestellt wird:
[Mathematische Formel 1]

$$\alpha \text{ (Si-Material)} + \beta \text{ (Kohlenstoffmaterial) (1)}$$

(wobei in der Formel das Si-Material eine Si-haltige Legierung ist; das Kohlenstoffmaterial eine oder zwei oder mehrere Arten ausgewählt aus der Gruppe bestehend aus Graphit, nicht graphitierbarem Kohlenstoff und amorphem Kohlenstoff ist; $\alpha$ und $\beta$ Massen-% jeder Komponente in der Negativelektroden-Aktivmaterialschicht darstellen; und $80 \leq \alpha + \beta \leq 98$, $0,1 \leq \alpha \leq 40$, und $58 \leq \beta \leq 97,9$ erfüllt sind);
wenn Flächenanteile (%) des Si-Materials und des Kohlenstoffmaterials in einem Bereich eines Sichtfelds jedes Bildes von Querschnitten der Negativelektroden-Aktivmaterialschicht in einem Fall, in dem mehrere beliebige Stellen in einer Ebene der Negativelektroden-Aktivmaterialschicht ausgewählt sind, als S (%) bzw. (100 - S) (%) bezeichnet werden, eine Differenz zwischen dem Maximalwert und dem Minimalwert von S innerhalb von 5% liegt; und
wobei eine Variation der Beschichtungsmenge pro Flächeneinheit in der Negativelektroden-Aktivmaterialschicht an mehreren ausgewählten Stellen in einem Fall, in dem mehrere beliebige Stellen in einer Ebene der Negativelektroden-Aktivmaterialschicht ausgewählt sind, innerhalb von 5% liegt.

2. Nichtwässrige Elektrolyt-Sekundärbatterie nach Anspruch 1, wobei, wenn D50 eines Sekundärteilchendurchmessers des Si-Materials als A ($\mu$m) und D50 eines Sekundärteilchendurchmessers des Kohlenstoffmaterials als C ($\mu$m) bezeichnet werden, die folgende Gleichung 1 erfüllt ist:
[Mathematische Formel 2]

$$A / C < 0,5 \qquad \text{Gleichung 1;}$$

und wobei, wenn D90 eines Sekundärteilchendurchmessers des Si-Materials als B ($\mu$m) bezeichnet wird und eine Dicke der aktiven Materialschicht der negativen Elektrode als D ($\mu$m) bezeichnet wird, die folgende Gleichung 2 erfüllt ist:
[Mathematische Formel 3]

$$B / D < 0,5 \qquad \text{Gleichung 2.}$$

3. Nichtwässrige Elektrolyt-Sekundärbatterie nach einem der Ansprüche 1 oder 2, wobei das Positivelektroden-Aktivmaterial umfasst:
ein Verbundoxid auf Lithium-Nickel-Basis, dargestellt durch die allgemeine Formel (1): $Li_aNi_bMn_cCo_dM_xO_2$ (vorausgesetzt, dass a, b, c, d und x $0,9 \leq a \leq 1,2$; $0 < b < 1$; $0 < c \leq 0,5$; $0 < d \leq 0,5$; $0 \leq x \leq 0,3$ und $b + c + d = 1$ erfüllen; und M mindestens eines ausgewählt aus der Gruppe bestehend aus Ti, Zr, Nb, W, P, Al, Mg, V, Ca, Sr und Cr darstellt).

4. Nichtwässrige Elektrolyt-Sekundärbatterie nach einem der Ansprüche 1 bis 3, wobei die Positivelektroden-Aktivmaterialschicht eine rechteckige Form aufweist und das Aspektverhältnis der Elektrode, welches als ein Längen/Breiten-Verhältnis der rechteckigen Positivelektroden-Aktivmaterialschicht definiert ist, 1 bis 3 beträgt.

5. Nichtwässrige Elektrolyt-Sekundärbatterie nach einem der Ansprüche 1 bis 4, wobei der Separator ein Separator ist, bei dem eine hitzebeständige Isolierschicht auf ein poröses Substrat laminiert ist.

6. Nichtwässrige Elektrolyt-Sekundärbatterie nach einem der Ansprüche 1 bis 5, wobei die Batterie eine Laminatbatterie vom Flachstapeltyp ist, mit einer Konfiguration, bei der das Stromerzeugungselement in einem aus einem aluminiumhaltigen Laminatfilm gebildeten Batteriegehäuse eingeschlossen ist.

**Revendications**

1. Batterie secondaire à électrolyte non aqueux qui présente une valeur du rapport de volume de batterie (le produit de la surface projetée de la batterie en incluant la carcasse de l'enveloppe externe de la batterie et l'épaisseur de la batterie) sur la capacité nominale de 10 cm3/Ah ou moins et une capacité nominale de 3 Ah ou plus, la batterie comprenant :

   un élément de génération de puissance incluant :

   une électrode positive comprenant une couche de matériau actif d'électrode positive contenant un matériau actif d'électrode positive formé sur la surface du collecteur de courant de l'électrode positive,
   une électrode négative comprenant une couche de matériau actif d'électrode négative contenant un matériau actif d'électrode négative formé sur la surface du collecteur de courant de l'électrode négative, et
   un séparateur, où

   la couche de matériau actif d'électrode négative comprend un matériau actif d'électrode négative représenté par la formule (1) suivante :
   [Formule mathématique 1]

$$\alpha \text{ (matériau Si)} + \beta \text{ (matériau carbone) (1)}$$

   (dans la formule, le matériau Si est un alliage contenant du Si, le matériau carbone appartient à un, deux ou plusieurs types sélectionnés à partir du groupe constitué de graphite, carbone ne pouvant être graphité et carbone amorphe ; $\alpha$ et $\beta$ représentent le pourcentage en masse de chaque composant dans la couche de matériau actif d'électrode négative, et les équations $80 \leq \alpha + \beta \leq 98$, $0,1 \leq \alpha \leq 40$ et $58 \leq \beta \leq 97,9$ sont satisfaites), lorsque les proportions de surface (%) du matériau Si et du matériau carbone sont respectivement désignées comme S (%) et (100 - S) (%), dans une surface de champ de vision de chaque image des sections transversales de la couche de matériau actif d'électrode négative, dans un cas où une pluralité de places arbitraires est sélectionnée dans le plan de la couche de matériau actif d'électrode négative, la différence entre la valeur maximale et la valeur minimale de S vaut moins de 5 %, et
   dans laquelle la variation de valeur de revêtement par unité de surface dans la couche de matériau actif d'électrode négative vaut moins de 5 % au niveau d'une pluralité de sites sélectionnés, dans un cas où une pluralité de places arbitraires est sélectionnée dans le plan de la couche de matériau actif d'électrode négative.

2. Batterie secondaire à électrolyte non aqueux selon la revendication 1, dans laquelle, lorsque la valeur D50 d'un diamètre de particule secondaire du matériau Si est désignée sous la forme A($\mu$m) et que la valeur D50 d'un diamètre de particule secondaire du matériau carbone est désignée comme étant C($\mu$m), l'équation 1 suivante est satisfaite :
   [Formule mathématique 2]

$$A / C < 0,5 \text{ équation 1,}$$

   et dans laquelle, lorsque la valeur D90 du diamètre de particule secondaire du matériau Si est désignée comme étant B($\mu$m) et que l'épaisseur de la couche de matériau actif d'électrode négative est désignée comme étant D($\mu$m), l'équation 2 suivante est satisfaite :
   [Formule mathématique 3]

$$B / D < 0,5 \text{ équation 2.}$$

3. Batterie secondaire à électrolyte non aqueux selon l'une quelconque des revendications 1 ou 2, dans lequel le matériau actif d'électrode positive comprend :

un oxyde composite à base de lithium nickel représenté par la formule générale $Li_aNi_bMn_cCO_dM_xO_2$ (étant entendu que a, b, c, d et x satisfont à $0,9 \le a \le 1,2$, $0 < b < 1,0$, $0 < c \le 0,5$, $0 < d \le 0,5$, $0 \le x \le 0,3$ et $b + c + d = 1$ ; et où M représente au moins un type sélectionné à partir du groupe constitué de Ti, Zr, Nb, W, P, Al, Mg, V, Ca, Sr et Cr) .

4. Batterie secondaire à électrolyte non aqueux selon l'une quelconque des revendications 1 à 3, dans laquelle la couche de matériau actif d'électrode positive présente une forme rectangulaire, et le rapport de forme de l'électrode, défini comme étant le rapport longueur / largeur de la couche de matériau actif d'électrode positive rectangulaire, vaut de 1 à 3.

5. Batterie secondaire à électrolyte non aqueux selon l'une quelconque des revendications 1 à 4, dans laquelle le séparateur est un séparateur dans lequel une couche d'isolant résistant à la chaleur est stratifiée sur un substrat poreux.

6. Batterie secondaire à électrolyte non aqueux selon l'une quelconque des revendications 1 à 5, où la batterie est une batterie stratifiée de type pile plate présentant une configuration dans laquelle l'élément de génération de puissance est scellé dans une carcasse d'enveloppe externe de batterie formée d'un film stratifié contenant de l'aluminium.

FIG.1

FIG.2

FIG.3 ( a )

FIG.3 ( b )

## FIG.4

MIXING RATIO OF Si MATERIAL: 0% BY MASS

## FIG.5

MIXING RATIO OF Si MATERIAL: 1.92% BY MASS

# FIG.6

MIXING RATIO OF Si MATERIAL: 9.6% BY MASS

**EP 3 451 430 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009517850 A
- WO 2015111187 A1
- WO 2015146864 A1
- JP 2014082139 A
- KR 20150062918 A
- JP 2006073480 A
- JP 2011105588 A
- JP 2000077071 A